# EUROPÄISCHE PATENTSCHRIFT

(11) **EP 4 062 597 B1**
(45) Veröffentlichungstag und Bekanntmachung des Hinweises auf die Patenterteilung: **21.05.2025**
(21) Anmeldenummer: 20811994.1
(22) Anmeldetag: 20.11.2020
(51) Int. Cl.: H04L 12/46, H04L 12/403, H04J 3/06, H04L 12/40, G05B 19/418

(54) **VERFAHREN, SYSTEM UND GATEWAY ZUR VERNETZUNG ZEITSENSITIVER FELDBUSSE**
METHOD, SYSTEM, AND GATEWAY FOR LINKING TIME-SENSITIVE FIELDBUSES
PROCÉDÉ, SYSTÈME ET PASSERELLE POUR RELIER DES BUS DE TERRAIN SENSIBLES AU TEMPS

(30) Priorität: 20.11.2019 DE 102019217906
(43) Veröffentlichungstag der Anmeldung: 28.09.2022
(73) Patentinhaber: Wago Verwaltungsgesellschaft mbH, 32423 Minden (DE)
(72) Erfinder: SCHWAMBORN, Fabian, 32657 Lemgo (DE)
(74) Vertreter: Bardehle Pagenberg Partnerschaft mbB Patentanwälte Rechtsanwälte
(86) Internationale Anmeldenummer: PCT/EP2020/082958
(87) Internationale Veröffentlichungsnummer: WO 2021/099602

(56) Entgegenhaltungen:
- DE-A1- 102012 204 586
- US-A1- 2016 080 533

## Beschreibung

### Gebiet der Erfindung

Die Erfindung betrifft zeitsensitive Feldbussysteme, insbesondere industrielle Feldbussysteme zur Steuerung industrieller Systeme. Insbesondere betrifft die Erfindung ein Verfahren, ein System und ein Gateway zur Vernetzung mindestens zweier zeitsensitiver Feldbusse.

### Hintergrund der Erfindung

Feldbusse dienen dazu, verschiedene Teilnehmergeräte (z.B. Feldgeräte wie Sensoren, Aktoren, Messfühler, Stellglieder, usw. sowie Controller, wie z.B. Steuerungs- bzw. Automatisierungsgeräte, Speicher-Programmierbare-Steuerungen, SPS, usw.) in einer Anlage (z.B. industrielle Fertigungsanlage, Fahrzeug, Gebäude usw.) zum Zweck der Kommunikation untereinander zu verbinden. Die Kommunikation findet dabei insbesondere, jedoch nicht ausschließlich, zwischen verschiedenen Feldgeräten und einem Feldbus-Controller statt, der die in der Anlage ablaufenden Prozesse steuert und überwacht. Ein Teilnehmergerät kann ein Feldgerät oder ein Controller sein und weist insbesondere eine Schnittstelle mit dem Feldbus auf.

Die über einen Feldbus zu übertragenden Nachrichten (z.B. Datenblöcke, Datenströme) sind dabei wenigstens zum Teil zeitsensitiv, d.h. sie haben Echtzeit-Anforderungen in Bezug auf die Übertragungslatenzzeit. Beispielsweise ist es für derartige zeitsensitive Daten erforderlich, dass eine von einem Teilnehmergerät abgesendete Nachricht innerhalb einer vorhersagbaren Zeitspanne zuverlässig vom Feldbus-Controller oder einem anderen an den Feldbus angeschlossenen Feldgerät empfangen wird.

Die zwischen Teilnehmergeräten des Feldbusses zu übertragenden Daten umfassen nicht nur Wertkommunikation, wie z.B. Messwerte, Stellwerte oder Anweisungen, sondern auch Ereigniskommunikation zur zeitlichen Koordination von Maschinen und Anlagenteilen. Beispielsweise erfolgt die Koordination und Synchronisation von Bewegungen von Maschinenteilen zunehmend nicht mehr über mechanische Vorrichtungen (z.B. Metallpressen mit mechanisch starr gekoppelten Einlege- und Auswurfvorrichtungen im Maschinentakt, Nockenwellen, Getriebe usw.), sondern über digitale Nachrichten, die mit Echtzeit-Anforderungen über Feldbusse übertragen werden.

Ein Feldbus ist einer Zeitdomäne zugeordnet, in welcher alle Teilnehmergeräte jeweils einen Zeitgeber (z.B. eine Uhr) aufweisen. Die Zeitgeber der Teilnehmergeräte sind innerhalb der Zeitdomäne untereinander synchronisiert und weisen somit ein gemeinsames Verständnis der Zeit auf. Damit können alle Teilnehmergeräte eines Feldbusses einem festgelegten Feldbus-Kommunikationszyklus folgen und sind aufeinander abgestimmt, um zum richtigen Zeitpunkt die entsprechenden Aktionen ausführen. Ein Teilnehmergerät des Feldbusses fungiert dabei als Master für die Zeitdomäne, wobei der Zeitgeber des Masters die Zeitreferenz für die anderen Teilnehmergeräte der Zeitdomäne liefert. Letztere Teilnehmergeräte, die innerhalb der Zeitdomäne ihre Zeit von dem Master ableiten, werden auch als Slave bezeichnet. Die Rolle des Zeit-Masters im Feldbus kann dabei von einem Feldbus-Controller, jedoch auch von einem anderen an den Feldbus angeschlossenen Teilnehmergerät übernommen werden. Der Zeit-Master des Feldbusses kann seine Zeitbasis mit einer anderen Zeitbasis synchronisieren, beispielsweise mit dem Zeit-Master eines anderen Feldbusses oder mit einer hierarchisch übergeordneten Zeitbasis. Indem die Master mehrerer Feldbusse ihre jeweilige Feldbus-Zeit miteinander synchronisieren, kann eine Zeitdomäne auch mehrere Feldbusse umfassen. Durch die Synchronisation der Zeitbasis werden zwar die "Uhren" angeglichen. Dies bedeutet jedoch nicht notwendigerweise, dass zwei Feldbusse innerhalb einer Zeitdomäne gleiche Kommunikationszyklen aufweisen.

Eine erste Generation von Feldbussen wurde entwickelt, um den Verkabelungsaufwand durch die früher übliche Parallelverdrahtung von Maschinenteilen mittels Kabelbäumen durch digitale Übertragungstechnik zu ersetzen. Hierfür wurden mehrere, teils proprietäre Feldbusprotokolle entwickelt. Spätere Generationen von Feldbussen basieren vor allem auf dem Ethernet-Standard IEEE 802.3, wobei die Ethernet-Protokolle modifiziert oder erweitert wurden, um zeitsensitive Netzwerke (engl. Time-Sensitive Networks, TSN) zu realisieren.

Standards für Echtzeit-Ethernet-Protokolle werden beispielsweise von der IEEE 802.1Q Taskgroup für TSN-Netzwerke entwickelt. Ein echtzeit-unterstützender Scheduler (time-aware scheduler) wird beispielsweise durch den IEEE802.1QBv-Standard definiert. Der Scheduler ermöglicht es, die Kommunikation in einem Netzwerk in feste, sich periodisch wiederholende Kommunikationszyklen einzuteilen und innerhalb der Zyklen feste Zeitschlitze zur Übertragung zeitsensitiver Daten zu definieren, reservieren oder auszuhandeln. Hierdurch kann eine getaktete Ende-zu-Ende Übertragung zwischen zwei Teilnehmergeräten realisiert werden.

Außerhalb der für Echtzeit-Übertragung vorgesehenen Zeitschlitze können nicht-zeitsensitive Daten (Best-Effort-Daten) übertragen werden, wobei hierfür die bekannten Protokolle für eine paketvermittelte Übertragung (z.B. Ethernet-Protokoll) verwendet werden. Durch den echtzeit-unterstützenden Scheduler können Schutzbänder eingerichtet werden, um ein Überlappen von Übertragungen nicht-zeitsensitiver Datenpakete mit den für Echtzeitübertragung reservierten Zeitschlitzen zu vermeiden.

Das Dokument US 2016/080533 A1 offenbart ein Gateway, das zwischen zwei Netzwerken eines Fahrzeugs Daten übertragen kann. Hierbei ist das erste Netzwerk ein zeitsensitives FlexRay Netzwerk und das zweite Netzwerk ein Fahrzeug-Ethernet-Netzwerk.

Des Weiteren ist es in TSN-Netzwerken möglich, die Übertragung nicht-zeitsensitiver Datenpakete während der Echtzeit-Intervalle zu unterbrechen und danach fortzusetzen. Auf diese Weise wird in einem TSN-fähigen Netzwerk die Koexistenz zeitsensitiver und nicht-zeitsensitiver Kommunikation ermöglicht.

Im Zuge der zunehmenden Digitalisierung und Vernetzung von Anlagen (z.B. eines gesamten Produktionsstandorts) besteht die Notwendigkeit, Kommunikation zwischen Feldbussen sowie die Kommunikation zwischen einem Feldbus und Einrichtungen einer übergeordneten Steuerungsebene, Prozessleitebene, Betriebsleitebene und/oder Unternehmensebene oder zu ermöglichen. Die Vernetzung betrifft sowohl nicht-zeitsensitive Daten als auch zeitsensitive Daten.

Zwar basieren die meisten heute gebräuchlichen Echtzeit-Protokolle für Feldbusse auf Ethernet, jedoch gibt es trotz dieser Gemeinsamkeit technische Unterschiede, so dass verschiedene Feldbus-Typen untereinander inkompatibel oder nicht vollständig kompatibel sind. Es kann auch vorkommen, dass verschiedene Generationen von Feldbussen verwendet werden, beispielsweise wenn Teile einer Anlage hinzugefügt, ausgetauscht oder modernisiert werden, wobei Feldbusse unterschiedlicher Generationen nicht notwendigerweise vollständig kompatibel sind. Gegenwärtig werden Anstrengungen unternommen, universell verwendbare Echtzeit-Protokolle zu spezifizieren, welche die vielen proprietären und untereinander nicht kompatiblen Protokolle für zeitsensitive Feldbusse ablösen sollen. Jedoch wird deren Verwendung den Austausch bzw. die Umrüstung bestehender Feldbussysteme bedingen, was häufig wirtschaftlich nicht vertretbar ist.

Bekannte Lösungen für die zeitsensitive Kommunikation zwischen zwei oder mehreren Feldbussen gehen davon aus, dass alle zu koppelnden Feldbusse sowohl ein einheitliches Zeitverständnis aufweisen, wobei jedoch auch alle Zeitversätze sowie Zeitdauern und/oder Startzeiten der Feldbus-Kommunikationszyklen synchronisiert sind. Feldbusse werden jedoch häufig zu Beginn einer Fertigung aufwendig konfiguriert, so dass die durch den Feldbus gesteuerten Maschinen und/oder Anlagenteile optimal aufeinander abgestimmt sind. Eine Angleichung der Zykluszeiten eines bestehenden Feldbusses an neu hinzukommende Anlagenteile mit weiteren Feldbussen würde jedoch eine Neukonfiguration der durch den Feldbus gesteuerten bestehenden Prozesse notwendig machen.

Es besteht daher ein Bedarf, zeitsensitive Feldbusse miteinander zu vernetzen, die nicht vollständig miteinander kompatibel sind.

### Zusammenfassung der Erfindung

Die Aufgabe wird insbesondere durch ein Verfahren zur Vernetzung eines ersten zeitsensitiven Feldbusses mit einem zweiten zeitsensitiven Feldbus gemäß Anspruch 1, durch ein System zur Vernetzung mindestens zweier zeitsensitive Feldbusse gemäß Anspruch 8 sowie durch einen Gateway zur Zeitsynchronisation und zur Vernetzung mindestens zweier zeitsensitive Feldbusse gemäß Anspruch 12 gelöst.

Zur Lösung der Aufgabe wird insbesondere ein Gateway verwendet, das die Kommunikation zwischen zeitsensitiven Feldbussen vermittelt. Da das Gateway die jeweilige Zeitdomäne aller daran angeschlossenen Feldbusse unterstützt, können die Feldbusse weitgehend ohne Angleichung der Zeitdomänen und insbesondere der innerhalb der Feldbusse definierten Zeiten der Kommunikationszyklen miteinander kommunizieren. Das gilt sowohl für zeitsensitive Daten als auch für nicht-zeitsensitive Daten.

Ein Aspekt der vorliegenden Erfindung betrifft ein Verfahren zur Vernetzung eines ersten zeitsensitiven Feldbusses mit einem zweiten zeitsensitiven Feldbus, wobei der erste zeitsensitive Feldbus ein erstes Teilnehmergerät umfasst, und eine erste eigene Zeitdomäne aufweist. Der zweite zeitsensitive Feldbus umfasst ein zweites Teilnehmergerät und weist eine zweite eigene Zeitdomäne auf. Die erste Zeitdomäne und die zweite Zeitdomäne sind frequenzsynchronisiert. Der erste und der zweite Feldbus sind mittels eines Gateways miteinander verbunden. Das Verfahren umfasst ein Speichern im Speicher des Gateways eines ersten Teilnehmergeräte-Identifikators, wobei der erste Teilnehmergeräte-Identifikator ein virtuelles Abbild des zugeordneten ersten Teilnehmergeräts des ersten Feldbusses identifiziert. Weiterhin umfasst das Verfahren ein Speichern im Speicher des Gateways eines zweiten Teilnehmergeräte-Identifikators, wobei der zweite Teilnehmergeräte-Identifikator ein virtuelles Abbild des zugeordneten zweiten Teilnehmergeräts des zweiten Feldbusses identifiziert. Des Weiteren umfasst das Verfahren ein Bestimmen einer ersten Zykluszeitdauer des ersten Feldbusses und einer zweiten Zykluszeitdauer des zweiten Feldbusses durch das Gateway zu einem Referenzzeitpunkt sowie ein Bestimmen eines Zeitversatzes zwischen der ersten Zeitdomäne und der zweiten Zeitdomäne durch das Gateway zu dem Referenzzeitpunkt.

Die Frequenzsynchronisation kann durch eine Synchronisation der Taktfrequenzen in den Zeitdomänen des ersten und zweiten Feldbusses erfolgen. Durch eine derartige Frequenzsynchronisation können der erste und zweite Feldbus bzw. die erste und zweite Zeitdomäne zwar unterschiedlich definierte Zeiten aufweisen, jedoch ist der Zeitversatz zeitinvariant, d.h. zeitlich konstant. Durch eine Synchronisation nur der Frequenzen in der ersten und zweiten Zeitdomäne ist können die Zeitregime (d.h. die gültige Zeit einer Zeitdomäne) in den Feldbussen weitgehend unangetastet bleiben.

Insbesondere wird ein harter Zeitsprung vermieden, der ansonsten in einem oder in beiden Feldbussen bei Angleichung der ersten und zweiten Feldbuszeit eintreten könnte. Die Angleichung der Frequenzen kann dabei über einen Zeitraum erfolgen, der den Betrieb der in den Feldbussen ablaufenden Prozesse nicht beeinträchtigt.

Die Verbindung des ersten und zweiten Feldbusses über das Gateway kann dadurch erfolgen, dass das Gateway jeweils als Teilnehmergerät an den ersten bzw. zweiten Feldbus angeschlossen wird. Hierfür kann beispielsweise ein Netzwerkanschluss mit entsprechender Schnittstelle zu dem jeweiligen Feldbus vorgesehen sein. Für die Kommunikation eines Feldbusses mit einem oder mehreren Teilnehmergeräten eines anderen Feldbusses kann das Gateway virtuelle Abbilder von Teilnehmergeräten bereitstellen. Die virtuellen Abbilder der Teilnehmergeräte des anderen Feldbusses sind dabei als Teilnehmergeräte des eigenen Feldbusses einrichtbar. Beispielsweise kann das virtuelle Abbild des ersten Teilnehmergeräts im ersten Feldbus als Teilnehmergerät im zweiten Feldbus eingerichtet sein, und das virtuelle Abbild des zweiten Teilnehmergeräts im zweiten Feldbus als Teilnehmergerät im ersten Feldbus.

Die virtuellen Abbilder können dabei jeweils über Teilnehmergeräte-Identifikatoren identifiziert werden. Beispielsweise kann das erste Teilnehmergerät im ersten Feldbus eine Nachricht an das virtuelle Abbild des zweiten Teilnehmergeräts schicken, wobei es den Teilnehmergeräte-Identifikator des virtuellen Abbilds des zweiten Teilnehmergeräts verwendet. In Ausführungen der Erfindung kann der Teilnehmergeräte-Identifikator als Netzwerk-Adresse ausgebildet sein, beispielsweise als Medium-Access-Control (MAC)-Adresse oder als Internet-Protokoll (IP)-Adresse oder als Adresse eines anderen Netzwerkprotokolls bzw. als Adresse oder Identifikator in einer Netzwerk-Protokollschicht. Das Gateway kann weiterhin dazu eingerichtet sein, über ein virtuelles Abbild eines Teilnehmergeräts empfangene Nachrichten an das zugeordnete Teilnehmergerät weiterzuleiten. Hierzu kann es beispielsweise einen Identifikator des zugeordneten Teilnehmergeräts verwenden. Des Weiteren kann das Gateway über ein virtuelles Abbild Antwortnachrichten des zugeordneten Teilnehmergeräts entgegennehmen und an das Teilnehmergerät im anderen Feldbus weiterleiten.

Dadurch, dass das Gateway die erste Zykluszeitdauer des ersten Feldbusses und die zweiten Zykluszeitdauer des zweiten Feldbusses zu einem Referenzzeitpunkt sowie das Bestimmen eines Zeitversatzes zwischen der ersten Zeitdomäne und der zweiten Zeitdomäne zu dem Referenzzeitpunkt vornimmt, kann das Gateway als Mittler oder "Dolmetscher" zwischen den Zeitregimen der Feldbusse agieren.

Beispielsweise kann das Gateway über das virtuelle Abbild des ersten Teilnehmergeräts von einem Teilnehmergerät im zweiten Feldbus eine Nachricht empfangen. Bei der Nachricht kann es sich beispielsweise um nicht-zeitsensitive Daten (sog. Best-Effort-Daten) handeln, die von dem Teilnehmergerät im zweiten Feldbus an das erste Teilnehmergerät im ersten Feldbus gesendet werden sollen. Da sich das virtuelle Abbild des ersten Teilnehmergeräts wie ein Teilnehmergerät im zweiten Feldbus verhält, kann es beim Empfangen der Nachricht die Zykluszeitdauer des zweiten Feldbusses berücksichtigen. Des Weiteren können im zweiten Feldbus Zeitschlitze zur Übertragung von zeitsensitiven Daten reserviert sein. Diese reservierten Zeitschlitze können derart berücksichtigt werden, dass die nicht-zeitsensitiven Daten außerhalb dieser Zeitschlitze empfangen werden. Das Gateway kann nunmehr die Nachricht unter Berücksichtigung der Zykluszeitdauer des ersten Feldbusses und unter Berücksichtigung von reservierten Zeitschlitzen zur Übertragung von zeitsensitiven Daten im ersten Feldbus weiterleiten. Für eine Weiterleitung außerhalb der reservierten Zeitschlitze im ersten Feldbus ist es außerdem möglich, dass das Gateway eine Zwischenspeicherung der nicht-zeitsensitiven Daten vornimmt.

Das erste Teilnehmergerät im ersten Feldbus kann in umgekehrter Richtung eine Antwort auf die empfangene Nachricht über das zugeordnete virtuelle Abbild im Gateway an das Teilnehmergerät im zweiten Feldbus schicken. Hierbei werden wiederum die Zykluszeitdauern sowie die reservierten Zeitschlitze im ersten und zweiten Feldbus ggf. durch Zwischenspeicherung der Daten im Gateway berücksichtigt. Ein derartiger Austausch kann sinnvoll sein, wenn Messwerte, Steuerungsbefehle, aber auch Software-Updates oder andere Betriebsdaten in nicht-zeitkritischer Weise zwischen Feldbussen mit unterschiedlichen Zeitdomänen übertragen werden sollen. Aber auch Daten zur Konfiguration, beispielsweise für die Reservierung von entsprechenden Feldbus-übergreifenden Zeitschlitzen zur Übertragung zeitsensitiver Daten können als nicht-zeitsensitive Kommunikation übertragen werden. Das virtuelle Abbild eines Teilnehmergeräts, das einem Teilnehmergerät in einem Feldbus zugeordnet ist, bildet dabei einen Terminierungspunkt für Kommunikationsprotokolle im anderen Feldbus und verhält sich für die Teilnehmergeräte im anderen Feldbus wie ein Teilnehmergerät jenes anderen Feldbusses.

Mittels der virtuellen Abbilder wenigstens eines Teils der Teilnehmergeräte eines Feldbusses kann das Gateway auch die Durchleitung von zeitsensitiven Daten unterstützen. Hierzu kann das Gateway beispielsweise eine zeitliche Überlappung eines durch den ersten Feldbus gesetzten ersten Zeitschlitzes zur Kommunikation zeitsensitiver Daten im ersten Feldbus und eines durch den zweiten Feldbus gesetzten zweiten Zeitschlitzes zur Kommunikation zeitsensitiver Daten im zweiten Feldbus bestimmen. In einigen Ausführungsformen kann die Bestimmung durch entsprechende Anfragen an Teilnehmergeräte des ersten bzw. zweiten Feldbusses erfolgen oder auch dadurch, dass das Gateway die Aushandlung derartiger Zeitschlitze vermittelt und die vermittelten Zeitschlitze und weitere Kommunikationsparameter speichert.

In weiteren Ausführungsformen umfasst das Verfahren weiterhin die Schritte eines Empfangens, durch das Gateway, einer Anforderung des zweiten Feldbusses eines Zeitschlitzes zur Übertragung von zeitsensitiven Daten von dem ersten Teilnehmergerät des ersten Feldbusses zu dem zweiten Teilnehmergerät des zweiten Feldbusses. Weiterhin kann das Verfahren ein Weiterleiten der Anforderung an den ersten Feldbus umfassen. Des Weiteren kann das Gateway eine Bestätigungsnachricht von dem ersten Feldbus empfangen und diese Bestätigungsnachricht an den zweiten Feldbus weiterleiten.

Die Anforderung kann dabei von einem beliebigen Teilnehmergerät des zweiten Feldbusses ausgehen und an ein anderes Teilnehmergerät im ersten Feldbus gerichtet sein.

Beispielsweise kann ein Teilnehmergerät mit Scheduler-Funktion im zweiten Feldbus eine Anforderung an den ersten Feldbus senden. Im ersten und zweiten Feldbus sei jeweils mindestens ein Scheduler für die Definition der Übertragungszyklen und/oder für die Vergabe, das Aushandeln, das Alloziieren, das Einrichten und/oder die Verwaltung der Zeitschlitze zur Übertragung zeitsensitiver Daten zuständig. Derartige Teilnehmergeräte können als Echtzeit-unterstützender Scheduler (time-aware scheduler) ausgebildet sein und hierfür die entsprechenden Protokolle und Funktionen z.B. gemäß dem IEEE 802.1Q bzw. 802.1Qbv-Standard durchführen. Die Anforderung kann an ein Teilnehmergerät des ersten Feldbusses mit Funktion als Echtzeit-unterstützender Scheduler gerichtet sein, das Zeitschlitze zu Kommunikation zeitsensitiver Daten für das erste Teilnehmergerät im ersten Feldbus Aushandeln und vergeben kann. Da das Gateway ebenfalls Teilnehmergerät des ersten Feldbusses ist, können Ausführungen derart sein, dass die Funktion als Echtzeit-unterstützender Scheduler für den ersten Feldbus auch durch das Gateway übernommen werden. In diesem Fall kann die Kommunikation mit dem ersten Feldbus Gateway-intern erfolgen. In ähnlicher Weise ist das Gateway ebenfalls Teilnehmergerät des zweiten Feldbusses, und Ausführungen können derart ausgestaltet sein, dass das Gateway die Funktion als Echtzeit-unterstützender Scheduler für den zweiten Feldbus übernimmt. In einigen Ausführungsformen kann die beschriebene Kommunikation einer Anforderung und einer Bestätigung damit ausschließlich Gateway-intern erfolgen, da das Gateway Teilnehmergerät sowohl des ersten als auch zweiten Feldbusses ist. In derartigen Fällen erübrigt es sich beispielsweise, eine Kommunikation der Anforderung des zweiten Feldbusses an den ersten Feldbus und eine Kommunikation der Bestätigungsnachricht von dem ersten Feldbus an den zweiten Feldbus über die physikalischen Schichten der Feldbusse zu führen.

In einigen Ausführungsformen kann das Gateway die Anforderung des zweiten Feldbusses empfangen. Zur Identifikation der Teilnehmergeräte, welche die zeitsensitiven Daten austauschen sollen, kann die Anforderung einen Identifikator der Datenquelle und des Datenziels enthalten. Beispielsweise kann sie den ersten Teilnehmergeräte-Identifikator oder einen anderen Identifikator enthalten, der im zweiten Feldbus zur Identifikation des ersten Teilnehmergeräts verwendet werden kann. Des Weiteren kann die Anforderung den zweiten Teilnehmergeräte-Indikator oder einen anderen Identifikator enthalten, der das zweite Teilnehmergerät oder dessen virtuelles Abbild identifiziert.

In umgekehrter Richtung empfängt das Gateway eine Bestätigungsnachricht von dem ersten Feldbus. In einigen Ausführungen kann die Bestätigungsnachricht von dem Echtzeit-unterstützenden Scheduler für den ersten Feldbus ausgesendet werden. Das Gateway leitet die Bestätigungsnachricht dann an den zweiten Feldbus weiter, beispielsweise an ein Teilnehmergerät mit Scheduler-Funktion, das für das zweite Teilnehmergerät die Einrichtung eines Zeitschlitzes zur Übertragung von zeitsensitiven Daten vornimmt.

Die Kommunikation der beschriebenen Anforderung und Bestätigung kann hierbei über ein virtuelles Abbild eines Teilnehmergeräts im ersten Feldbus, insbesondere ein virtuelles Abbild eines Echtzeit-unterstützenden Schedulers im ersten Feldbus geführt werden. Hierbei kann zunächst das virtuelle Abbild im Gateway über einen entsprechenden Teilnehmergeräte-Identifikator im zweiten Feldbus identifiziert werden. Das virtuelle Abbild hat dann eine Proxy-Funktion für den eigentlichen Echtzeit-unterstützenden Scheduler im ersten Feldbus.

In weiteren Ausführungsformen umfasst die (durch das Gateway) empfangene Anforderung eine Zeitangabe von mindestens einem Zeitpunkt und/oder mindestens einem Zeitintervall. Die Zeitangabe ist auf die Zeitdomäne des zweiten Feldbusses bezogen. Das Verfahren umfasst weiterhin ein Bestimmen, durch das Gateway, der Zeitangabe aus der empfangenen Anforderung bezogen auf die Zeitdomäne des ersten Feldbusses, unter Berücksichtigung des Zeitversatzes mit Bezug auf den Referenzzeitpunkt. Die durch das Gateway an den ersten Feldbus weitergeleitete Anforderung umfasst die Zeitangabe bezogen auf die Zeit Domäne des ersten Feldbusses.

Durch eine derartige Zeitangabe kann die Anforderung präzisiert werden. Beispielsweise können Zeitpunkte und Intervalle kommuniziert werden, die im zweiten Feldbus für eine zeitsensitive Kommunikation zur Verfügung stehen oder ausgeschlossen werden sollen. Die Anforderung kann den Charakter eines "Befehls" haben, wobei durch den zweiten Feldbus ein Zeitschlitz zur zeitsensitiven Kommunikation entsprechend der Zeitangabe einzurichten ist, oder den Charakter einer "Verhandlungsbasis", wobei der zweite Feldbus die Zeitangabe weiter konkretisieren kann.

Vorliegend kann die Zeitangabe durch ein Teilnehmergerät des zweiten Feldbusses bezogen auf die Zeitdomäne des zweiten Feldbusses an das Gateway übertragen werden, wobei das Gateway eine Konversion der Zeitangabe bezogen auf den ersten Feldbus vornehmen kann.

Das Verfahren kann weiterhin ein Setzen eines ersten Zeitschlitzes zur Kommunikation zeitsensitiver Daten im ersten Feldbus, durch den ersten Feldbus, basierend auf der Zeitangabe aus der Anforderung bezogen auf die erste Zeitdomäne des ersten Feldbusses und ein Setzen eines zweiten Zeitschlitzes zur Kommunikation zeitsensitiver Daten im zweiten Feldbus, durch den zweiten Feldbus, basierend auf der Zeitangabe bezogen auf die zweite Zeitdomäne des zweiten Feldbusses umfassen. Hierbei erfolgt das Setzen des ersten Zeitschlitzes durch den ersten Feldbus sowie das Setzen des zweiten Zeitschlitzes durch den zweiten Feldbus jeweils derart, dass sich der erste Zeitschlitz des ersten Feldbusses und der zweite Zeitschlitz des zweiten Feldbusses zeitlich überlappen. Da die entsprechende Zeitangabe im ersten und zweiten Feldbus jeweils bezüglich des eigenen Zeitregimes vorliegt, entfällt ein Umrechnen der Zeitangabe durch Teilnehmergeräte des ersten bzw. zweiten Feldbusses. Dennoch können diese den ersten und zweiten Zeitschlitz derart festlegen, dass sich die Zeitschlitze zeitlich überlappen. Das Setzen der Zeitschlitze im ersten bzw. zweiten Feldbus kann durch entsprechende Teilnehmergeräte, beispielsweise mit entsprechender Funktion als Echtzeit-unterstützender Scheduler erfolgen. Sofern diese Funktionalität im Gateway erfolgt, welches in einigen Ausführungsformen ebenfalls Teilnehmergerät des ersten bzw. zweiten Feldbusses sein kann, kann die Kommunikation im Zusammenhang mit dem Setzen der Zeitschlitze wenigstens teilweise Gateway-intern erfolgen.

In weiteren Ausführungsformen umfasst die empfangene Bestätigungsnachricht von dem ersten Feldbus eine weitere Zeitangabe von mindestens einem Zeitpunkt und/oder mindestens einem Zeitintervall, wobei die genannte weitere Zeitangabe auf die Zeitdomäne des ersten Feldbusses bezogen ist. Das Verfahren umfasst weiterhin ein Bestimmen, durch das Gateway, der weiteren Zeitangabe aus der empfangenen Bestätigungsnachricht bezogen auf die Zeitdomäne des zweiten Feldbusses, unter Berücksichtigung des Zeitversatzes mit Bezug auf den Referenzzeitpunkt. Die an den zweiten Feldbus weitergeleitete Bestätigungsnachricht umfasst die weitere Zeitangabe bezogen auf die Zeitdomäne des zweiten Feldbusses, wobei das Setzen des ersten Zeitschlitzes durch den ersten Feldbus auf der genannten weiteren Zeitangabe basiert, und wobei das Setzen des zweiten Zeitschlitzes durch den zweiten Feldbus auf der genannten weiteren Zeitangabe basiert. Auf diese Weise ist es nicht nur möglich, dass die Anforderungsnachricht eine Zeitangabe enthält, sondern auch die Bestätigungsnachricht kann eine weitere Zeitangabe enthalten. In dieser können beispielsweise seitens des ersten Feldbusses andere Zeitangaben als die der Anforderung vorgeschlagen werden bzw. eine vorangehende Zeitangabe konkretisiert werden. Das Gateway konvertiert hierbei die weitere Zeitangabe bezüglich des Zeitregimes des jeweiligen Feldbusses, so dass in den Feldbussen keine diesbezüglichen Umrechnungen vorgenommen werden brauchen. Die beschriebene Anforderung an den ersten Feldbus und die beschriebene Bestätigung mit Austausch von Zeitangaben kann auch Teil eines umfangreicheren Protokolls zur Einrichtung von Zeitschlitzen zur Kommunikation zeitsensitiver Daten sein, wobei weitere Nachrichten mit Zeitangaben zwischen den Feldbussen ausgetauscht werden.

In weiteren Ausführungsformen umfasst das Verfahren weiterhin ein Empfangen, durch das Gateway, von zeitsensitiven Daten von dem ersten Teilnehmergerät des ersten Feldbusses, wobei die zeitsensitiven Daten den zweiten Teilnehmergeräte-Indikator enthalten, während der Überlappung des ersten Zeitschlitzes und des zweiten Zeitschlitzes. Das Verfahren umfasst weiterhin das Bestimmen, durch das Gateway eines Identifikators des zweiten Teilnehmergeräts basierend auf dem zweiten Teilnehmergeräte-Identifikator während der Überlappung des ersten Zeitschlitzes und des zweiten Zeitschlitzes. Die empfangenen zeitsensitiven Daten werden weiterhin während der Überlappung des ersten Zeitschlitzes und des zweiten Zeitschlitzes durch das Gateway an das zweite Teilnehmergerät weitergeleitet.

In derartigen Ausführungsformen dient der zweite Teilnehmergeräte-Indikator der Identifikation des zweiten Teilnehmergeräts für den ersten Feldbus. Hierbei kann das erste Teilnehmergerät des ersten Feldbusses die zeitsensitiven Daten an das virtuelle Abbild des zweiten Teilnehmergeräts adressieren, wodurch das zweite Teilnehmergerät als Teilnehmergerät des ersten Feldbusses adressierbar ist. Das Gateway leitet die Daten dann an das zugeordnete zweite Teilnehmergerät zweiten Feldbus weiter, wobei es dessen Identifikator benutzt. Beispielsweise können die Identifikatoren Netzwerkadressen (MAC-Adressen oder IP-Adressen) darstellen, wobei das Gateway die Zieladresse einer physikalischen Dateneinheit (MAC PDU, IP-Datenpaket) austauscht.

Das Empfangen, Bestimmen des Identifikators und Weiterleiten der zeitsensitiven Daten durch das Gateway erfolgt während der zeitlichen Überlappung des ersten und zweiten Zeitschlitzes. Eine derartige Durchleitung der zeitsensitiven Daten kann dadurch erfolgen, dass das Gateway einen Terminierungspunkt für die physikalische Schicht seitens des zweiten Feldbusses bereitstellt. Dann kann das Gateway die physikalischen Signale empfangen, demodulieren und, wenn nötig dekodieren (z.B. bezüglich der Kanalcodierung), so dass die zeitsensitiven Daten an der Oberkante der physikalischen Schicht als Datenbits zur Verfügung stehen. Das Weiterreichen der Daten kann in einem Beispiel in der sog. Medium-Access- (MAC-) Protokollschicht über eine sog. MAC-Brücke (z.B. nach dem IEE 802.1D Standard) erfolgen. Hierdurch kann beispielsweise der MAC-Protokoll-Header zur Weiterleitung an den anderen Feldbus ausgelesen und mit dem Identifikator des zweiten Teilnehmergeräts verändert werden. Das Durchleiten der Daten kann auch auf einer höheren Protokollschicht als der MAC-Schicht erfolgen, wobei das Gateway die entsprechenden Protokollstapel bereitstellt. Durch die Signal- und Datenverarbeitung im Gateway können geringe Verzögerungen resultieren. Da der erste bzw. der zweite Zeitschlitz jedoch für die Übertragung der zeitsensitiven Daten reserviert ist und ein Überlappungsbereich in beiden Zeitschlitzen besteht, kann eine Zwischenspeicherung in Warteschlangen weitgehend vermieden werden. Die auftretenden Verzögerungen können somit vorhersagbar und beherrschbar gehalten werden, so dass die Echtzeitanforderungen an die Übertragung erfüllt werden.

Es ist in der Praxis möglich, dass neben dem Zeitversatz zwischen der ersten und zweiten Zeitdomäne weitere zeitliche Unterschiede bestehen, z.B. in Bezug auf unterschiedliche Dauern der ersten und zweiten Zeitschlitze sowie der zeitlichen Lage ersten und zweiten Zeitschlitze für die Übertragung zeitsensitiver Daten. In einem Bereich, in dem die ersten und zweiten Zeitschlitze überlappen, können zeitsensitive Daten zwischen den Feldbussen durch das Gateway durchgeleitet werden. Außerhalb des Überlappungsbereichs können im ersten bzw. zweiten Feldbus dennoch Zeitschlitze zur Übertragung zeitsensitiver Daten reserviert sein, wobei diese Zeitspannen beispielsweise für die Übertragung zeitsensitiver Daten innerhalb der Feldbusse unabhängig voneinander genutzt werden können.

Zur Durchführung der genannten Frequenzsynchronisation der ersten und zweiten Zeitdomäne kann das Gateway einen ersten Zeitgeber und einen zweiten Zeitgeber aufweisen. Zur Frequenzsynchronisation der beiden Feldbusse möge beispielsweise der erste Zeitgeber des Gateways als Slave mit der ersten Zeitdomäne des ersten Feldbusses synchronisiert werden. Des Weiteren möge der zweite Zeitgeber des Gateways als Slave mit der zweiten Zeitdomäne des zweiten Feldbusses synchronisiert werden. Dann kann zunächst ausschließlich die Frequenz des ersten Zeitgebers als Slave mit Frequenz der zweiten Zeitdomäne des zweiten Zeitgebers synchronisiert werden, und danach der erste Zeitgeber als Master für den ersten Feldbus gesetzt werden, um die Frequenz (des ersten Feldbusses) auf die Frequenz des ersten Zeitgebers zu setzen.

Da das Gateway eigene Zeitgeber aufweist, die (z.B. ausschließlich) in der Frequenz miteinander synchronisiert werden, kennt das Gateway jeweils die in der ersten und zweiten Zeitdomäne definierte Zeit und kann beispielsweise die Übertragung nicht-zeitsensitiver Daten derart koordinieren, dass die Zeitschlitze zur Übertragung zeitsensitiver Daten nicht berührt werden. Des Weiteren ist nach erfolgter Frequenzsynchronisation garantiert, dass die zeitlichen Unterschiede zwischen den Feldbussen zwar noch vorhanden sind, jedoch zeitinvariant sind, und somit nicht "davonlaufen". In dem beschriebenen Szenario leitet der erste Feldbus seine Zeitbasis von dem zweiten Feldbus ab, wobei das Setzen des ersten Zeitgebers als Master für den ersten Feldbus lediglich einen geringfügigen Eingriff in das Zeitregime des ersten Feldbusses darstellt. Beispielsweise kann das Setzen auf die Frequenz des ersten Zeitgebers über einen Zeitraum erfolgen, der einen harten Zeitsprung vermeidet. Der erste Feldbus kann somit während des Betriebs "unter Last" synchronisiert werden.

Ein weiterer Aspekt der Erfindung betrifft ein System zur Vernetzung mindestens zweier zeitsensitiver Feldbusse. Das System weist einen ersten zeitsensitiven Feldbus auf, der ein erstes Teilnehmergerät umfasst und eine erste eigene Zeitdomäne aufweist. Das System weist weiterhin einen zweiten zeitsensitiven Feldbus auf, der ein zweites Teilnehmergerät umfasst und eine zweite eigene Zeitdomäne aufweist, wobei die erste Zeitdomäne und die zweite Zeitdomäne frequenzsynchronisiert sind. Des weiteren weist das System ein Gateway auf, das den ersten und den zweiten Feldbus miteinander verbindet. Das Gateway weist Mittel auf zum Speichern im Speicher des Gateways eines ersten Teilnehmergeräte-Identifikators, wobei der erste Teilnehmergeräte-Identifikator ein virtuelles Abbild des zugeordneten ersten Teilnehmergeräts des ersten Feldbusses identifiziert. Das Gateway weist Mittel auf zum Speichern im Speicher des Gateways eines zweiten Teilnehmergeräte-Identifikators, wobei der zweite Teilnehmergeräte-Identifikator ein virtuelles Abbild des zugeordneten zweiten Teilnehmergeräts des zweiten Feldbusses identifiziert. Des Weiteren weist das Gateway Mittel auf zum Bestimmen einer ersten des ersten Feldbusses und einer zweiten Zykluszeitdauer des zweiten Feldbusses durch das Gateway zu einem Referenzzeitpunkt sowie Mittel zum Bestimmen eines Zeitversatzes zwischen der ersten Zeitdomäne und der zweiten Zeitdomäne durch das Gateway zu dem Referenzzeitpunkt. Das System ist in weiteren Ausführungsformen dazu eingerichtet, die Schritte (z.B., alle Schritte) des oben beschriebenen Verfahrens auszuführen.

Ein weiterer Aspekt der Erfindung betrifft ein Gateway zur Vernetzung eines ersten zeitsensitiven Feldbusses mit einem zweiten zeitsensitiven Feldbus, wobei der erste zeitsensitive Feldbus ein erstes Teilnehmergerät umfasst und eine erste eigene Zeitdomäne aufweist, und wobei der zweite zeitsensitive Feldbus ein zweites Teilnehmergerät umfasst und eine zweite eigene Zeitdomäne aufweist, wobei die erste Zeitdomäne und die zweite Zeitdomäne frequenzsynchronisiert sind. Das Gateway umfasst Mittel zum Verbinden jeweils des ersten zeitsensitiven Feldbusses und des zweiten zeitsensitiven Feldbusses mit dem Gateway, Mittel zum Speichern im Speicher des Gateways eines ersten Teilnehmergeräte-Identifikators, wobei der erste Teilnehmergeräte-Identifikator ein virtuelles Abbild des zugeordneten ersten Teilnehmergeräts des ersten Feldbusses identifiziert sowie Mittel zum Speichern im Speicher des Gateways eines zweiten Teilnehmergeräte-Identifikators, wobei der zweite Teilnehmergeräte-Identifikator ein virtuelles Abbild des zugeordneten zweiten Teilnehmergeräts des zweiten Feldbusses identifiziert. Weiterhin umfasst das Gateway Mittel zum Bestimmen einer ersten Zykluszeitdauer des ersten Feldbusses und einer zweiten Zykluszeitdauer des zweiten Feldbusses zu einem Referenzzeitpunkt und Mittel zum Bestimmen eines Zeitversatzes zwischen der ersten Zeitdomäne und der zweiten Zeitdomäne zu dem Referenzzeitpunkt.

In weiteren Ausführungsformen umfasst weist das Gateway weiterhin Mittel auf zum Empfangen einer Anforderung des zweiten Feldbusses eines Zeitschlitzes zur Übertragung von zeitsensitiven Daten von dem ersten Teilnehmergerät des ersten Feldbusses zu dem zweiten Teilnehmergerät des zweiten Feldbusses. Das Gateway weist weiterhin Mittel auf zum Weiterleiten der Anforderung an den ersten Feldbus sowie Mittel zum Empfangen einer Bestätigungsnachricht von dem ersten Feldbus und Mittel zum Weiterleiten der Bestätigungsnachricht an den zweiten Feldbus.

In weiteren Ausführungsformen umfasst die empfangene Anforderung eine Zeitangabe von mindestens einem Zeitpunkt und/oder mindestens einem Zeitintervall, wobei die Zeitangabe auf die Zeitdomäne des zweiten Feldbusses bezogen ist. Das Gateway weist Mittel auf zum Bestimmen der Zeitangabe aus der empfangenen Anforderung bezogen auf die Zeitdomäne des ersten Feldbusses, unter Berücksichtigung des Zeitversatzes mit Bezug auf den Referenzzeitpunkt. Die an den ersten Feldbus weitergeleitete Anforderung umfasst die Zeitangabe bezogen auf die Zeitdomäne des ersten Feldbusses.

In weiteren Ausführungsformen umfasst das Gateway Mittel zum Bestimmen einer zeitlichen Überlappung eines durch den ersten Feldbus gesetzten ersten Zeitschlitzes zur Kommunikation zeitsensitiver Daten im ersten Feldbus und eines durch den zweiten Feldbus gesetzten zweiten Zeitschlitzes zur Kommunikation zeitsensitiver Daten im zweiten Feldbus. Das Gateway umfasst weiterhin Mittel zum Empfangen von zeitsensitiven Daten von dem ersten Teilnehmergerät des ersten Feldbusses, wobei die Zeitsensitiven Daten den zweiten Teilnehmergeräte-Indikator enthalten während der Überlappung des ersten Zeitschlitzes und des zweiten Zeitschlitzes, Mittel zum Bestimmen eines Identifikators des zweiten Teilnehmergeräts basierend auf dem zweiten Teilnehmergeräte-Identifikator während der Überlappung des ersten Zeitschlitzes und des zweiten Zeitschlitzes sowie Mittel zum Weiterleiten der empfangenen zeitsensitiven Daten an das zweite Teilnehmergerät während der Überlappung des ersten Zeitschlitzes und des zweiten Zeitschlitzes.

Die Ausführungsformen des Gateways weisen also Mittel zum Ausführen der Verfahrensschritte beim oben beschriebenen Verfahren auf, die durch das dort genannte Gateway ausgeführt werden.

### Kurze Beschreibung der Zeichnungen

In der folgenden detaillierten Beschreibung werden Aspekte der Erfindung unter Bezugnahme auf die Zeichnungen beschrieben, wobei
- Fig. 1: ein Blockschaltbild eines Systems mit einem ersten zeitsensitiven Feldbus und mit einem zweiten zeitsensitiven Feldbus darstellt;
- Fig. 2: schematisch ein Zeitdiagramm eines ersten und zweiten Feldbusses sowie die Übertragung nicht-zeitsensitiver Daten durch das Gateway darstellt;
- Fig. 3: schematisch ein detailliertes Zeitdiagramm der für einen ersten und zweiten Feldbus definierten Zykluszeiten darstellt;
- Fig. 4: schematisch ein Beispiel eines Anforderungsprotokolls für Zeitschlitze zur Übertragung von zeitsensitiven Daten zwischen dem ersten und dem zweiten Feldbus sowie ein Protokoll zur Übertragung von zeitsensitiven Daten zwischen dem ersten und dem zweiten Feldbus darstellt; und
- Fig. 5: schematisch ein Zeitdiagramm eines ersten und zweiten Feldbusses sowie die Übertragung zeitsensitiver Daten durch das Gateway darstellt.

### Detaillierte Beschreibung

Die folgende detaillierte Beschreibung erläutert Ausführungsbeispiele der Erfindung anhand der oben genannten Figuren. Hierbei beschreiben gleiche Referenzzeichen in verschiedenen Figuren jeweils die gleiche Vorrichtung, den gleichen Verfahrensschritt bzw. die gleiche Zeiteinheit, usw.

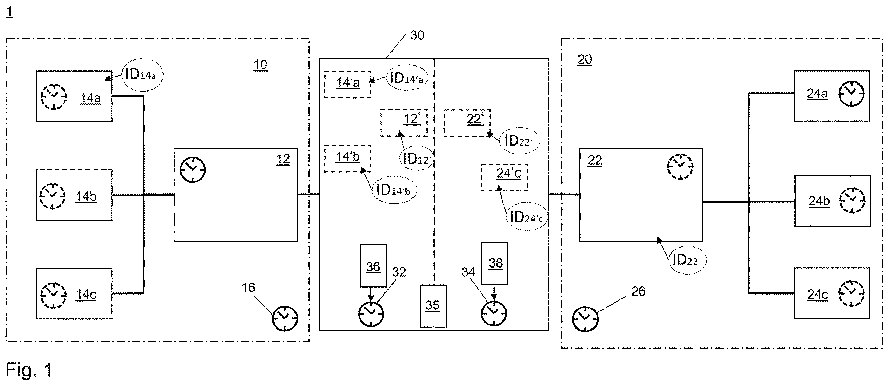

Fig. 1 zeigt ein Blockschaltbild eines exemplarischen Systems 1 mit einem ersten zeitsensitiven Feldbus 10 und einem zweiten zeitsensitiven Feldbus 20. Der erste Feldbus 10 und der zweite Feldbus 20 umfassen exemplarisch die Teilnehmergeräte 12, 14a-c, bzw. 22, 24a-c, wobei die Teilnehmergeräte 12, 22 jeweils Controller des Feldbusses, beispielsweise ein Automatisierungsgerät, eine Speicher-programmierbare-Steuerung, SPS, ein Knoten oder eine andere industrielle Steuerung sind und die Teilnehmergeräte 14a-c, bzw. 24a-c Feldgeräte, beispielsweise E/A-Bausteine für Sensoren und/oder Aktoren sind, die Größen eines durch den Feldbus automatisierten Prozesses messen bzw. beeinflussen können. Die Teilnehmergeräte 12, 14a-c, bzw. 22, 24a-c sind im jeweiligen Feldbus 10, 20 kommunikativ untereinander über eine Schnittstelle miteinander verbunden, wobei die Definition der Schnittstelle ein Schnittstellenprotokoll umfasst.

Die Teilnehmergeräte 12, 14a-c des ersten Feldbusses 10 gehören einer ersten Zeitdomäne 16 an, wobei alle Teilnehmergeräte 12, 14a-c dasselbe Verständnis einer absoluten Zeit aufweisen. Hierzu weist jedes Teilnehmergerät 12, 14a-c jeweils einen Zeitgeber auf, der in Fig. 1 schematisch durch das Ziffernblatt einer Uhr symbolisiert ist. In entsprechender Weise gehören die Teilnehmergeräte 22, 24a-c des zweiten Feldbusses 20 einer zweiten Zeitdomäne 26 an. In den Feldbussen 10 und 20 sind die Feldbusleitungen ausgehend vom Controller 12, 22 sternförmig mit den Feldgeräten verbunden. Allgemein können Feldbusse auch durch andere Topologien, z.B. Baumtopologie, Bustopologie, Ringtopologie usw. gebildet werden. Es ist auch möglich, dass die Teilnehmergeräte 12, 24a-c, bzw. 22, 24a-c eines Feldbusses 10, 20 wenigstens teilweise durch ein drahtloses Netzwerk miteinander verbunden sind.

Jeweils ein Teilnehmergerät 12, 24a-c, bzw. 22, 24a-c gibt für den jeweiligen Feldbus 10 bzw. 20 die Zeit vor und wird daher als Master bezeichnet. Beim ersten Feldbus 10 ist beispielsweise zunächst der Controller 12 der Master, was in Fig. 1 als Ziffernblatt mit durchgezogenen Linien dargestellt ist. Beim zweiten Feldbus 20 ist beispielsweise das Teilnehmergerät 24a der Feldbus-Master. Die Uhr eines Masters 12 bzw. 24a gibt dabei jeweils die Zeit im Feldbus vor, wobei sich die übrigen Teilnehmergeräte eines Feldbusses, d.h. Teilnehmergeräte 14a-c im ersten Feldbus bzw. Teilnehmergeräte 22, 24b-c ihre Zeit jeweils von dem Master ableiten. Dies geschieht beispielsweise, indem sich die Teilnehmer innerhalb eines Feldbusses in regelmäßigen oder unregelmäßigen Abständen Nachrichten nach dem Precision Time Protocol nach dem Standard IEEE 1588 austauschen, und so auf diese Weise ein gemeinsames Verständnis der Zeit erlangen und aufrechterhalten.

Innerhalb des ersten Feldbusses 10 und des zweiten Feldbusses 20 können jeweils nicht-zeitsensitive als auch zeitsensitive Daten übertragen werden, wie im Folgenden noch genauer beschrieben werden wird. Beispielsweise kann die Datenübertragung in beiden Feldbussen gemäß den IEEE 802.1Q-Standards in Übertragungszyklen eingeteilt werden. Für den ersten Feldbus 10 und den zweiten Feldbus 20 können dabei unterschiedliche Zykluszeitdauern definiert werden. Da dem ersten Feldbus 10 und dem zweiten Feldbus 20 jeweils unterschiedliche Zeitdomänen 16 bzw. 26 zugeordnet sind, können die Zykluszeiten in diesem Fall auch als der Zeitdomäne zugeordnet angesehen werden.

Des Weiteren können im ersten Feldbus 10 erste Zeitschlitze und im zweiten Feldbus 20 zweite Zeitschlitze definiert werden, in denen eine Übertragung von Echtzeit-Daten zwischen zwei Teilnehmergeräten jeweils desselben Feldbusses möglich ist. Die Übertragung von Echtzeit-Daten kann eine getaktete Ende-zu-Ende Übertragung zwischen zwei Teilnehmergeräten sein, oder eine Übertragung mit geringen Verzögerungen, die insoweit bekannt, deterministisch und/oder kausal beherrschbar sind, dass sie Echtzeit-Anforderungen genügen.

Für die Definition der Übertragungszyklen und der Zeitschlitze für die Übertragung zeitsensitiver Daten können ein oder mehrere Teilnehmergeräte des jeweiligen Feldbusses jeweils eine Scheduler-Funktion aufweisen. Der Scheduler ist dafür zuständig, die Zykluszeitdauern im ersten bzw. im zweiten Feldbus zu definieren und diese an die anderen Teilnehmergeräte des jeweiligen Feldbusses zu kommunizieren. Des Weiteren kann ein Scheduler dazu eingerichtet sein, Anforderungen bezüglich der Übertragung zeitsensitiver Daten im ersten bzw. im zweiten Feldbus entgegenzunehmen, vergebene Zeitschlitze zu verwalten, eine Kommunikation mit einem anfordernden Teilnehmergerät zur Aushandlung von Zeitschlitzen zur zeitsensitiven Übertragung zu führen, und die Anforderung entsprechend zu bestätigen oder abzulehnen. Der Scheduler kann des Weiteren dazu eingerichtet sein, vergebene Zeitschlitze zur Übertragung zeitsensitiver Daten an die anderen Teilnehmergeräte kommunizieren. Im Folgenden soll angenommen werden, dass im ersten Feldbus 10 mindestens eines der Teilnehmergeräte 12, 24a-c als Scheduler eingerichtet ist, und die entsprechenden Protokolle (z.B. gemäß dem IEEE 802.1Q-Standard oder einem davon abgeleiteten Standard) durchführt. Ebenso wird angenommen, dass im zweiten Feldbus 20 mindestens eines der Teilnehmergeräte 22, 24a-c eine Scheduler-Funktion wahrnimmt.

Das System 1 umfasst weiterhin ein Gateway 30, über welches beide Feldbusse 10, 20 miteinander kommunikativ verbunden sind. Zwar zeigt Fig. 1, dass die Feldbusse 10, 20 über ihre Controller 12 und 22 miteinander verbunden sind. Dies ist jedoch nicht zwingend. Vielmehr hat das Gateway 30 eine Schnittstelle zu jedem der Feldbusse 10 und 20, so dass es in Bezug auf den jeweiligen Feldbus 10, 20 ein Teilnehmergerät darstellt. Das Gateway 30 unterstützt hierbei mindestens zwei Zeitdomänen 32 und 34, die bei Ankopplung mit den Zeitdomänen der Feldbusse 16 bzw. 26 als Teil der jeweiligen Zeitdomäne abgeglichen werden. Weitere Zeitdomänen können gemäß der Anzahl anzukoppelnder Feldbusse unterstützt werden. Insbesondere umfasst das Gateway Zeitgeber 36 und 38, die für die erste 16 bzw. für die zweite Zeitdomäne 26 konfiguriert werden können.

Die Teilnehmergeräte der Feldbusse können über Identifikatoren adressiert werden. Fig. 1 illustriert hierzu exemplarisch den Identifikator ID14a eines ersten Teilnehmergeräts 14a im ersten Feldbus sowie den Identifikator ID22 eines zweiten Teilnehmergeräts 22 im zweiten Feldbus. Hierbei ist es lediglich exemplarisch, dass das zweite Teilnehmergerät 22 auch der Controller im zweiten Feldbus ist. Die Identifikatoren können, wie oben angesprochen beispielsweise MAC-Adressen, IP-Adressen oder andere Identifikatoren sein.

Des Weiteren kann das Gateway in seinem Speicher virtuelle Abbilder von einigen Teilnehmergeräten der Feldbusse unterhalten. Fig. 1 illustriert exemplarisch die virtuellen Abbilder 12', 14'a, 14'b sowie 22', 24'c, die jeweils über ihre Teilnehmergeräte-Identifikatoren ID12', ID14'a, ID14'b sowie ID22', ID24'c adressierbar sind. Die virtuellen Abbilder der Teilnehmergeräte sind den jeweiligen Teilnehmergeräten gegenseitig zugeordnet, d.h. Teilnehmergerät 14a im ersten Feldbus 10 ist seinem virtuellen Abbild 14'a zugeordnet und umgekehrt, Teilnehmergerät 14b ist seinem virtuellen Abbild 14'b zugeordnet und umgekehrt, Teilnehmergerät 12 ist seinem virtuellen Abbild 12' zugeordnet und umgekehrt, sowie Teilnehmergerät 22 im zweiten Feldbus 20 ist seinem virtuellen Abbild 22' zugeordnet und umgekehrt. In dieser Weise kann einem oder mehreren Teilnehmergeräten im ersten bzw. zweiten Feldbus jeweils ein virtuelles Abbild zugeordnet sein.

Die virtuellen Abbilder können als Teilnehmergerät im jeweils anderen Feldbus erscheinen. Beispielsweise können die virtuellen Abbilder 12', 14'a und 14'b als Teilnehmergeräte des zweiten Feldbusses 20 erscheinen, obwohl ihre zugeordneten realen Geräte Teilnehmergeräte des ersten Feldbusses 10 sind. Ebenso kann im Beispiel der Fig. 1 das virtuelle Abbild 22' als Teilnehmergerät im ersten Feldbus 10 erscheinen, obwohl das zugeordnete Teilnehmergerät 22 im zweiten Feldbus 20 angeschlossen ist. Die virtuellen Abbilder sind dabei über ihre zugeordneten Teilnehmergeräte-Identifikatoren adressierbar. Beispielsweise sind die virtuellen Abbilder 12', 14'a, 14'b jeweils über ihre zugeordneten Teilnehmergeräte-Identifikatoren ID12', ID14'a, ID14'b für andere Teilnehmergeräte im zweiten Feldbus 20 identifizierbar und adressierbar. Ebenso sind die virtuellen Abbild 22', 24'c über die zugeordneten Teilnehmergeräte-Identifikatoren ID22', ID24'c für die anderen Teilnehmergeräte des ersten Feldbusses 10 identifizierbar und adressierbar.

Auf diese Weise ist es möglich, Teilnehmergeräte eines anderen Feldbusses in einen Feldbus zu integrieren. Die entsprechenden virtuellen Abbilder haben dabei eine entsprechende Schnittstelle bezüglich der Feldbus-Kommunikationsprotokolle (z.B. basierend auf Ethernet). Beispielsweise können die virtuellen Abbilder 12', 14'a, 14'b am Kommunikationsprotokoll des zweiten Feldbusses 20 teilnehmen. Sie bilden in Bezug auf den zweiten Feldbus 20 Terminierungspunkte der Feldbus-Kommunikationsprotokolle in gleicher Weise wie auch die "realen" Teilnehmergeräte des zweiten Feldbusses 20. Ebenso stellen die virtuellen Abbilder 22', 24'c einen Terminierungspunkt der Feldbus-Kommunikationsprotokolle als Schnittstelle zum ersten Feldbus 10 dar.

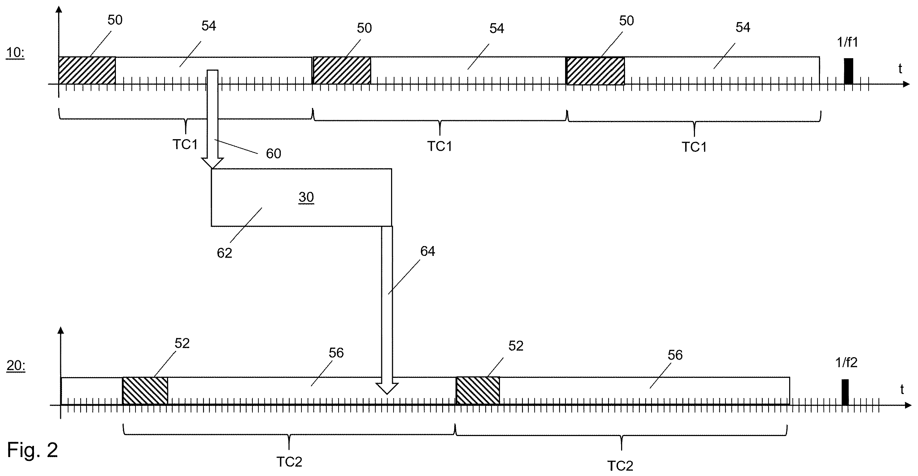

Fig. 2 zeigt ein exemplarisches Zeitdiagramm des ersten Feldbusses 10 und des zweiten Feldbusses 20. Hierbei weist der erste Feldbus 10 Kommunikations- bzw. Übertragungszyklen mit periodisch wiederkehrenden Zyklusintervallen TC1 auf, die nach Lage und Dauer gemäß dem in Fig. 2 oberen Zeitstrahl definiert sind. Entsprechend weist der zweite Feldbus 20 Kommunikationszyklen mit periodisch wiederkehrenden Zyklusintervallen TC2 auf, die nach Lage und Dauer gemäß dem in Fig. 2 unteren Zeitstrahl definiert sind. In Fig. 2 ist der Kehrwert der Taktfrequenzen 1/f1 bzw. 1/f2, nämlich die Taktzyklus-Dauer jeweils durch einen schwarzen Balken veranschaulicht. Selbst wenn beide Taktfrequenzen f1 und f2 nominell (d.h. gemäß einer Spezifikation) die gleichen Frequenzen aufweisen, so ist es möglich, dass die Uhren der Zeitdomänen 16 bzw. 26 der beiden Feldbusse unterschiedlich schnell laufen, wenn die tatsächlichen Werte der Taktfrequenzen f1 und f2 sich geringfügig unterscheiden.

In den Feldbussen 10, 20 können erste Zeitschlitze 50 bzw. zweite Zeitschlitze 52 zur Übertragung zeitsensitiver Daten innerhalb des jeweiligen Feldbusses 10, 20 definiert, verhandelt oder ermittelt werden. Hierzu kann beispielsweise eines der Teilnehmergeräte 12, 14a-c im ersten Feldbus 10 sowie eines der Teilnehmergeräte 22, 24a-c im zweiten Feldbus 20 als Echtzeit-unterstützender Scheduler (time-aware scheduler) gemäß dem Standard IEEE 802.1QBv konfiguriert sein. Lediglich exemplarisch fallen die ersten Zeitschlitze 50 und die zweiten Zeitschlitze 52 mit dem Anfang der entsprechenden Kommunikationszyklen zusammen. Allgemein können die Zeitschlitze 50, 52 zur zeitsensitiven Übertragung an jeglicher Position innerhalb eines Übertragungszyklus liegen. Es ist auch möglich, pro Übertragungszyklus mehrere getrennte Zeitschlitze 50, 52 für eine zeitsensitive Kommunikation zu definieren.

Fig. 2 zeigt weiterhin Zeitspannen 54 und 56, die zu den jeweiligen Übertragungszyklen gehören, die außerhalb der zur Übertragung zeitsensitiver Daten reservierten Zeitschlitze 50 bzw. 52 liegen. In diesen Intervallen 54, 56 können innerhalb der Feldbusse 10, 20 nicht-zeitsensitive Daten beispielsweise nach dem Ethernet-Protokoll übertragen werden, für die das CSMA/CD (Carrier Sense Multiple Access with Collision Detection) Zugriffsverfahren gilt.

Zur Anbindung des Gateways 30 werden in einem Ausführungsbeispiel zunächst die Zeitgeber 36 und 38 des Gateways 30 als Slave in Bezug auf die Zeitdomänen 16, 26 der Feldbusse 10 und 20 synchronisiert. Hierdurch hat das Gateway eine synchronisierte Schnittstelle als Teilnehmergerät sowohl zum ersten 10 als auch zum zweiten Feldbus 20. Somit kann seitens des Gateways 30 beispielsweise der Zeitversatz zwischen der Zeitdomäne 16 des ersten Feldbusses 10 und der Zeitdomäne 26 des zweiten Feldbusses 20 beobachtet werden. Des Weiteren sind seitens des Gateways 30 auch die entsprechenden Zykluszeitdauern TC1 und TC2, die zeitliche Lage der Kommunikationszyklen sowie die Zeitschlitze 50 und 52 bekannt, in denen in den jeweiligen Feldbussen 10, 20 zeitsensitive Kommunikation abgewickelt wird.

Damit wird es möglich, zunächst nicht-zeitsensitive Daten auch zwischen den Feldbussen auszutauschen. Eine derartige Übertragung kann beispielsweise dadurch erfolgen, dass vom ersten Feldbus 10 nicht-zeitsensitive Daten 60 während eines ersten nicht-zeitsensitiven Intervalls 54 an das Gateway 30 übertragen werden, wie in Fig. 2 durch den Pfeil 60 symbolisiert. Diese Daten 60 können in einem Zwischenspeicher 35 des Gateways 30 zwischengespeichert werden (s. hierzu auch Fig. 1), wie durch den Schritt 62 (in Fig. 2) symbolisiert ist. Schließlich können die zwischengespeicherten Daten vom Gateway 30 auf den zweiten Feldbus 20 während Intervallen 56 außerhalb der zweiten Zeitschlitze 52 übertragen werden, wie durch den Pfeil 64 symbolisiert. Beispielsweise muss das Gateway 30 zum Aussenden der Daten 64 auf den zweiten Feldbus mittels des CSMA/CD-Verfahrens oder einem anderen Bewerbungsverfahren (engl. contention) sicherstellen, dass der zweite Feldbus 20 während der Zeitschlitze 56 zur Übertragung frei ist.

Ein Austausch nicht-zeitsensitiver Daten 60, 64 zwischen den Feldbussen kann beispielsweise dazu verwendet werden, eine Frequenzsynchronisation der ersten Zeitdomäne 16 und der zweiten Zeitdomäne 26 zu unterstützen. Durch eine derartige Synchronisation der Zeitgeber-Taktfrequenzen bleibt der Zeitversatz zwischen den Zeiten beider Zeitdomänen 16, 26 stabil, wodurch das Bestimmen von Zeitpunkten im Gateway 30 bzw. in den Teilnehmergeräten 12, 14a-c bzw. 22, 24a-c des ersten und zweiten Feldbusses in Bezug auf die jeweils andere Zeitdomäne 16, 26 vereinfacht wird. Hierzu soll exemplarisch das folgende Verfahren zur Synchronisation der Taktfrequenzen f1 und f2 der Zeitgeber 36 und 38 beschrieben werden. In einer Ausführungsform sind die Taktgeber 36, 38 des Gateways 30 zunächst als Slave der ersten 16 bzw. zweiten 26 Zeitdomäne synchronisiert und haben die gleiche nominale Frequenz. Eine Frequenzsynchronisation kann nun dadurch erfolgen, dass der erste Zeitgeber 36 des Gateways 30 als Master für den ersten Feldbus 10 bestimmt wird, so dass das Gateway 30 über die Zeitsetzung im ersten Feldbus bestimmen kann. Weiterhin kann eine Synchronisation der Frequenz f1 des ersten Zeitgebers 36 des Gateways 30 auf die Frequenz f2 der zweiten Zeitdomäne 26 erfolgen. Eine Synchronisation ausschließlich der Frequenzen f1 und f2 in den Zeitdomänen 16, 26 kann Zeitsprünge der Teilnehmergeräte im ersten Feldbus 10 vermeiden. Die Synchronisation der Frequenzen kann dabei im laufenden Betrieb des ersten Feldbusses 10 über eine Anpasszeitdauer erfolgen, die lang genug gewählt wird, so dass die Prozesse des ersten Feldbusses 10 störungsfrei ablaufen können.

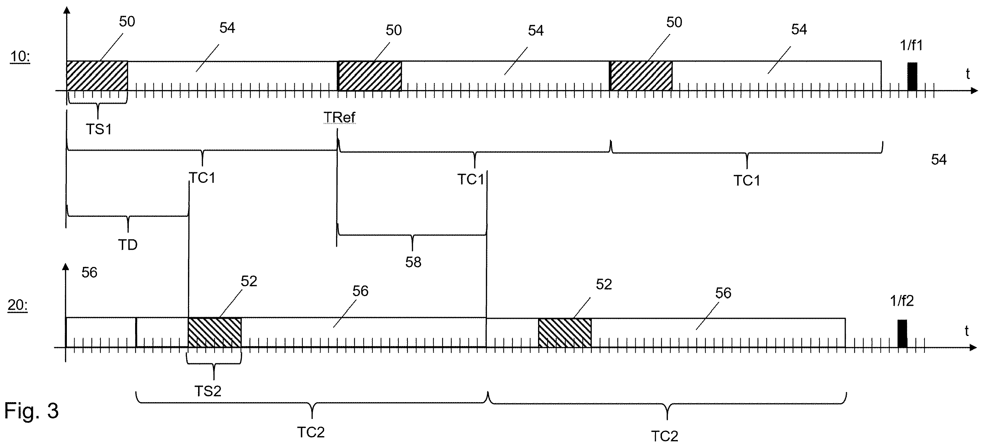

Fig. 3 zeigt schematisch ein detailliertes Zeitdiagramm der für den ersten und zweiten Feldbus 10, 20 definierten Zykluszeiten gemäß einiger Aspekte der Erfindung. In einem Beispiel können die Taktgeber in den Teilnehmergeräten der Feldbusse 10 und 20 beispielsweise nach dem oben beschriebenen Verfahren die gleichen Taktfrequenzen f1= f2 aufweisen. In Fig. 3 ist der Kehrwert der Taktfrequenzen 1/f1 bzw. 1/f2, nämlich die Taktzyklus-Dauer jeweils durch einen schwarzen Balken veranschaulicht.

In dem vorliegenden Beispiel sind nunmehr nur die Taktfrequenzen zwischen dem ersten und zweiten Feldbus 10,20 synchronisiert. Daher kann zwischen den Anfangszeitpunkten der Kommunikationszyklen ein Zeitversatz 58 auftreten. Ein derartiger Zeitversatz 58 ergibt sich einmal wegen der unterschiedlichen Definition der Zeit in beiden Feldbussen 10, 20, zum anderen auch aus der Differenz zwischen den Startzeitpunkten der Kommunikationszyklen des ersten 10 und zweiten Feldbusses 20, selbst wenn beide Feldbusse das gleiche Verständnis der Zeit aufweisen würden. Weiterhin können die Kommunikationszyklen unterschiedliche Dauern TC1 und TC2 aufweisen. Daher kann allgemeinhin der Zeitversatz 58 nur in Bezug auf einen (absoluten) Referenzzeitpunkt TRef definiert werden. Der absolute Referenzzeitpunkt TRef kann dabei sowohl in der Zeit des ersten Feldbusses 10 als auch in der Zeit des zweiten Feldbusses 20 entsprechend ausgedrückt werden. Stehen die Zeitdauern TC1 und TC2 in einem rationalen Verhältnis zueinander, so kehrt ein bestimmter Zeitversatz 58 nach einer vorhersagbaren Anzahl von Zyklen des ersten bzw. des zweiten Feldbusses wieder. In diesem Fall kann der Referenzzeitpunkt TRef beliebig innerhalb eines Wiederkehr-Intervalls gewählt werden. Beträgt beispielsweise die Zykluszeitdauer TC1 im ersten Feldbus 50 ms und die Zykluszeitdauer TC2 im zweiten Feldbus 25 ms, so kann der Zeitversatz 58 beispielsweise nach einem ersten Zyklus im zweiten Feldbus Null betragen, nach einem zweiten Zyklus im zweiten Feldbus 25 ms gegenüber dem ersten Feldbus, und dann wieder Null usw. Ist der Zeitversatz 58 jedoch zu einem Zeitpunkt TRef bekannt, so ist es möglich, für alle Kommunikationszyklen des ersten und zweiten Feldbusses den Zeitversatz 58 im Voraus zu bestimmen, selbst wenn die zykluszeitdauern TC1 und TC2 nicht in einem rationalen Verhältnis zueinander stehen.

Auf den Feldbussen 10 und 20 können des Weiteren unterschiedliche Dauern TS1 und TS2 der ersten und zweiten Zeitschlitze 50 bzw. 52 für die zeitsensitive Kommunikation auftreten, da diese für beide Feldbusse 10 und 20 unabhängig voneinander vereinbart werden können. Des Weiteren können die ersten und zweiten Zeitschlitze 50 bzw. 52 zeitliche Unterschiede TD in den Startzeiten aufweisen. Diese lassen sich im Allgemeinen wiederum nur in Bezug auf einen absoluten Referenzzeitpunkt TRef vorhersagbar bestimmen, da Startzeiten der Zeitschlitze 50 und 52 für die zeitsensitive Kommunikation mit den Zykluszeiten in den einzelnen Feldbussen variieren können.

Nach erfolgter Frequenzsynchronisation kann das Gateway 30 die Zykluszeitdauern TC1 und TC2 im ersten und zweiten Feldbus 10, 20 zu einem Referenzzeitpunkt TRef bestimmen. Des Weiteren kann das Gateway 30 den Zeitversatz 58 zwischen der ersten und zweiten Zeitdomäne 16, 26 zu dem Referenzzeitpunkt TRef bestimmen. Das Gateway 30 kann weiterhin die Zykluszeitdauer TC1 des ersten Feldbusses 10 an den zweiten Feldbus 20 kommunizieren sowie die Zykluszeitdauer TC2 des zweiten Feldbusses 20 an den ersten Feldbus 10 kommunizieren. Dies kann in Bezug auf den Referenzzeitpunkt TRef erfolgen. Auf diese Weise können beispielsweise Teilnehmergeräte des ersten bzw. des zweiten Feldbusses 10, 20 die Kommunikationszyklen des jeweils anderen Feldbusses 20, 10 vorhersagbar bestimmen.

Des Weiteren können virtuelle Abbilder von Teilnehmergeräten eines Feldbusses als Teil des anderen Feldbusses im Speicher des Gateway 30 instanziiert werden. Hierdurch werden die virtuellen Abbilder beispielsweise mit ihren entsprechenden Teilnehmergeräte-Identifikatoren sowie den Zuordnungen bezüglich ihrer realen Feldbus-Teilnehmergeräte initialisiert. Im Beispiel der Fig. 1 sind die virtuellen Abbilder 12', 14'a, 14'b zu den Teilnehmergeräten 12, 14a, 14b des ersten Feldbusses 10 instanziiert, wobei beispielsweise die entsprechenden Teilnehmergeräte-Identifikatoren ID12', ID14'a, ID14'b den entsprechenden Teilnehmergeräten 12, 14a, 14b zugeordnet werden. Dies kann beispielsweise durch entsprechende Zuordnungstabellen erfolgen, die in dem Gateway 30 und/oder den zugeordneten Teilnehmergeräten gespeichert werden. In entsprechender Weise seien virtuelle Abbilder 22', 24'c zu dem Teilnehmergeräten 22 bzw. 24c des zweiten Feldbusses 20 instanziiert.

Damit die virtuellen Abbilder jeweils als Teilnehmergeräte des anderen Feldbusses agieren können, kennt das Gateway 30 die entsprechenden Zeiten der Zeitdomänen. Insbesondere kennt das Gateway 30 den Zeitversatz 58 zwischen der ersten und zweiten Zeitdomäne 16, 26 zu dem Referenzzeitpunkt TRef. Des Weiteren kennt das Gateway 30 die Zykluszeitdauer TC1 des ersten Feldbusses 10 als auch auf die Zykluszeitdauer TC2 des zweiten Feldbusses 20 sowie die Zeiten der im ersten und zweiten Feldbus definierten ersten und zweiten Zeitschlitze 50 bzw. 52 für die zeitsensitive Kommunikation. Beispielsweise können die virtuellen Abbilder hierzu lesend auf den Speicher des Gateways 30 zugreifen.

Auf diese Weise kann das Gateway 30 Zeitangaben, d.h. Angaben von mindestens einem Zeitpunkt und/oder mindestens einem Zeitintervall, die bezüglich der Zeitdomäne eines Feldbusses vorliegen in Zeitangaben des anderen Feldbusses konvertieren. Dies kann von den einzelnen virtuellen Abbildern derart verwendet werden, dass beispielsweise das virtuelle Abbild 14'a eine Nachricht aus dem zweiten Feldbus 20 mit einer auf den zweiten Feldbus 20 bezogenen Zeitangabe empfangen kann, und bei einer Weiterleitung an das zugeordnete Teilnehmergerät 14a im ersten Feldbus 10 in eine entsprechende auf den ersten Feldbus 10 bezogene Zeitangabe konvertiert. Umgekehrt kann das virtuelle Abbild 14'a von dem zugeordneten Teilnehmergerät 14a eine Nachricht mit einer Zeitangabe bezogen auf den ersten Feldbus 10 entgegennehmen, konvertieren in eine Zeitangabe bezogen auf den zweiten Feldbus 20, und als (virtuelles) Teilnehmergerät des zweiten Feldbusses 20 in konvertierter Form ausgeben.

Diese Funktionalität kann insbesondere dann nützlich sein, wenn beispielsweise ein Teilnehmergerät des zweiten Feldbusses 20 eine Anforderung von Zeitschlitzen zur Übertragung von zeitsensitiven Daten an den ersten Feldbus 10 richten möchte. Ein Beispiel eines derartigen Anforderungsprotokolls sei im Folgenden exemplarisch beschrieben.

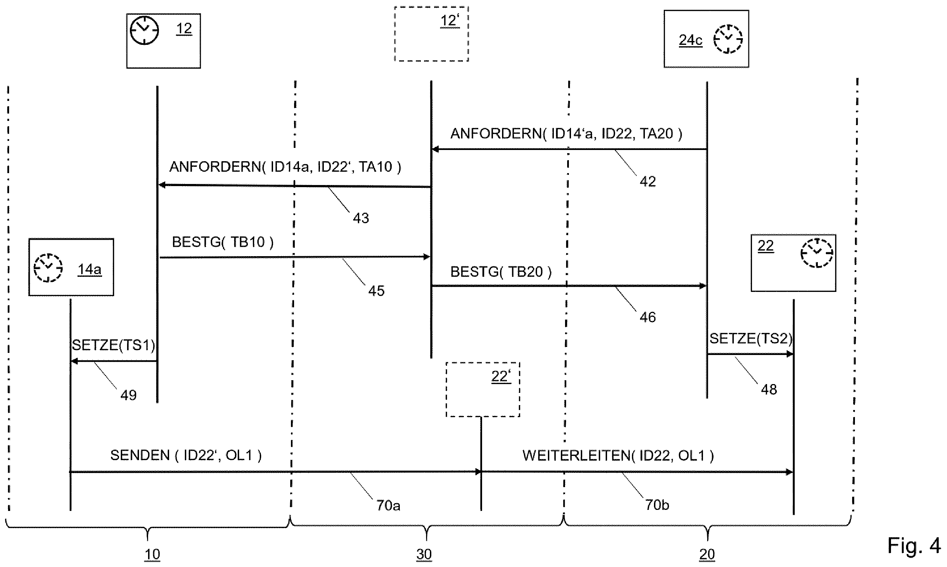

Fig. 4 zeigt ein Beispiel eines Anforderungsprotokolls für Zeitschlitze zur Übertragung von zeitsensitiven Daten zwischen dem ersten Feldbus 10 und dem zweiten Feldbus 20. Vorliegend soll eine Übertragung von zeitsensitiven Daten von dem Teilnehmergerät 14a im ersten Feldbus 10 an das Teilnehmergerät 22 im zweiten Feldbus 20 eingerichtet werden.

Die Anforderung selbst kann dabei von einem Teilnehmergerät im zweiten Feldbus ausgehen. Beispielsweise kann die Anforderung vom Teilnehmergerät 24c im zweiten Feldbus ausgehen, wobei das Teilnehmergerät 24c eine Scheduler-Funktionalität im zweiten Feldbus haben kann, wodurch es Zeitschlitze 52 zur Übertragung von zeitsensitiven Daten im zweiten Feldbus 20 einrichten kann. Das Gateway 30 hat in die virtuellen Abbilder 12', 14'a, 14'b als Teilnehmergeräte in den zweiten Feldbus 20 integriert. Die Anforderung kann somit an ein virtuelles Abbild eines Teilnehmergeräts des ersten Feldbusses gerichtet werden. Im vorliegenden Fall soll das virtuelle Abbild 12' adressiert werden, da das zugeordnete Teilnehmergerät 12 beispielhaft eine Scheduler-Funktionalität im ersten Feldbus 10 aufweise, wodurch es Zeitschlitze 50 zur Übertragung von zeitsensitiven Daten im ersten Feldbus 10 einrichten kann.

Um einen Zeitschlitz zur Übertragung von zeitsensitiven Daten anzufordern, sendet das Teilnehmergerät 24c eine Anforderung 42 an das virtuelle Abbild 12' des Teilnehmergeräts 12 im Gateway 30. Die Anforderung 42 enthält beispielsweise den Teilnehmergeräte-Identifikator ID14'a. Dieses Teilnehmergerät ist als virtuelles Abbild der Quelle für die zeitsensitiven Daten im zweiten Feldbus bekannt. Des Weiteren kann die Anforderung 42 einen Identifikator des Datenziels für die zeitsensitiven Daten, beispielsweise den zweiten Teilnehmergeräte-Identifikator ID22' oder den Identifikator des realen Teilnehmergeräts ID22 enthalten. Weiterhin kann die Anforderung 42 eine Zeitangabe, TA20 d.h. die Angabe von mindestens einem Zeitpunkt und/oder mindestens einem Zeitintervall enthalten. Diese Zeitangabe kann beispielsweise mehrere mögliche Zeitschlitze definieren, die im zweiten Feldbus 20 für eine Übertragung von zeitsensitiven Daten eingerichtet werden kann. Die Zeitangabe kann dabei bezogen auf das Zeitregime im zweiten Feldbus 20 sein, d.h. bezogen auf die zweite Zeitdomäne 26.

Das Gateway 30 kann die an das virtuelle Abbild 12' gerichtete Anforderung 42 empfangen, woraufhin das Gateway 30 die Anforderung 43 an das Teilnehmergerät 12, d.h. an den Scheduler im ersten Feldbus 10 weiterleitet. Optional kann das Gateway 30 dabei anstelle des Teilnehmergeräte-Identifikators ID14'a den Identifikator ID14a des realen Teilnehmergeräts einsetzen. Weiterhin kann das Gateway 30 dabei den Teilnehmergeräte-Identifikator ID22' verwenden, da das zugeordnete virtuelle Abbild im ersten Feldbus 10 als Identifikator für die Datenziel der zeitsensitiven Daten angesehen werden kann. Sofern die empfangene Anforderung 42 eine Zeitangabe TA20 enthält, konvertiert das Gateway 30 dieses in eine Zeitangabe TA10 verwendet diese für die weitergeleitete Anforderung 43, die auf den ersten Feldbus 10 bezogen ist, wobei der Zeitversatz 58 zum Referenzzeitpunkt TRef berücksichtigt wird.

Das Teilnehmergerät 12 im ersten Feldbus 10 kann bei Empfang der Anforderung 43 oder später einen geeigneten Zeitschlitz 50 bestimmen und eine Bestätigungsnachricht 45 an das Gateway 30 zur Weiterleitung an den zweiten Feldbus 10 senden. Die Bestätigungsnachricht 45 kann eine Zeitangabe TB10 enthalten, die auf den ersten Feldbus 10 bezogen ist. Beispielsweise kann die Zeitangabe TB10 den Zeitschlitz 52 definieren. Bei Empfang konvertiert das Gateway 30 die Zeitangabe TB10 in eine Zeitangabe TB20, die auf den zweiten Feldbus 20 bezogen ist und leitet sie in der Bestätigungsnachricht 46 an das Teilnehmergerät 24c im zweiten Feldbus 20 weiter. Das Gateway 30 kann hierfür das virtuelle Abbild 12' verwenden, das hierfür als Teilnehmergerät im zweiten Feldbus 20 eingerichtet ist.

Aufgrund des beschriebenen Anforderungsprotokolls kann das Teilnehmergerät 12 im ersten Feldbus 10 den Zeitschlitz 50 einrichten 49, und das Teilnehmergerät 24c im zweiten Feldbus 20 den Zeitschlitz 52 einrichten 48, wobei sich die Zeitschlitze 50 und 52 überlappen.

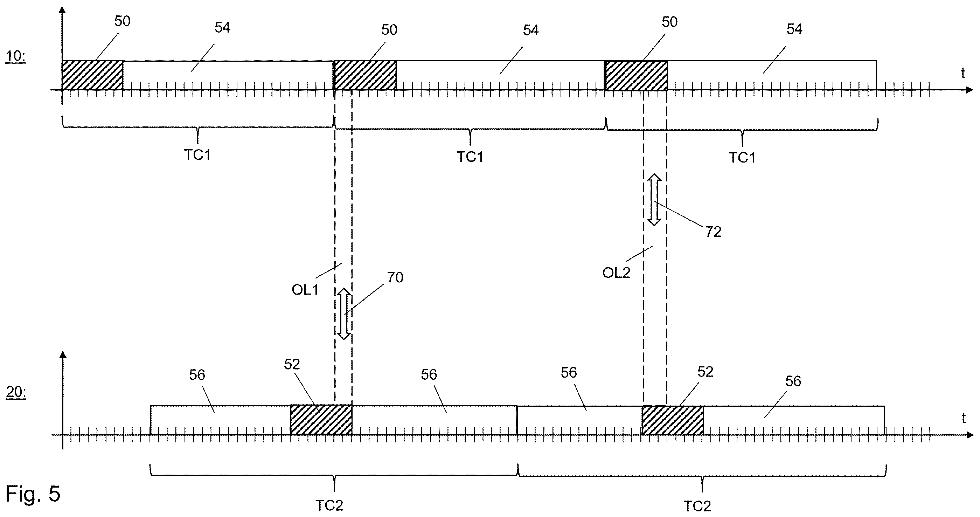

Fig. 5 zeigt schematisch ein Zeitdiagramm eines ersten 10 und eines zweiten Feldbusses 20 bei einer Übertragung zeitsensitiver Daten. Vorliegend wurden beispielsweise gemäß dem oben beschriebenen Anforderungsprotokoll oder einem vergleichbaren Protokoll im ersten Feldbus 10 Zeitschlitze 50 sowie im zweiten Feldbusses 20 Zeitschlitze 52 zur Übertragung von zeitsensitiven Daten vom für das Teilnehmergerät 14c zum Teilnehmergerät 24b vereinbart, die sich zumindest teilweise überlappen.

Insbesondere haben entsprechende Teilnehmergeräte des ersten und zweiten Feldbusses gemeinsame Überlappungsbereiche OL1 und OL2 in den Zeitschlitzen 50 bzw. 52 vereinbart und diese Informationen über das Gateway 30 ausgetauscht, so dass diese auch dem Gateway 30 bekannt sind.

In einer Ausführungsform ist es nicht notwendig, in jedem Zyklus TC1 bzw. TC2 des ersten bzw. des zweiten Feldbusses 10, 20 einen Überlappungsbereich OL1, OL2 für die zeitsensitive Kommunikation zu schaffen. Beispielsweise kann es genügen, während jedes zweiten, dritten, usw. Zyklus des ersten bzw. des zweiten Feldbusses 10, 20 einen Überlappungsbereich zu definieren.

Sind während der Kommunikationszyklen des ersten und zweiten Feldbusses 10, 20 die ersten und zweiten Zeitschlitze 50 bzw. 52 bekannt, die für eine zeitsensitive Kommunikation innerhalb der Feldbusse reserviert sind, so können die Überlappungsbereiche OL1 und OL2 für eine zeitsensitive Kommunikation zwischen den Feldbussen regelbasiert bestimmt bzw. berechnet werden. Dann genügt es, zu einem Referenzzeitpunkt TRef einen einziges Paar überlappender Zeitschlitze 50 und 52 zu bestimmen. Die Reservierung der Zeitschlitze 50 bzw. 52 kann dabei durch das Anforderungsprotokoll wie oben beschrieben in dem ersten bzw. zweiten Feldbus vorgenommen werden. In einer Ausführungsform kann das Gateways 30 die Zeitangaben der ersten und zweiten Zeitschlitze 50 und 52 jeweils bezüglich der Feldbus-eigenen Zeitdomäne zur Verfügung stellen. Die Bestimmung der Überlappungsbereiche OL1 und OL2 kann damit auch jeweils bezüglich der Feldbus-eigenen Zeitdomäne erfolgen.

Stehen die Zykluszeitdauern TC1 und TC2 in einem rationalen Verhältnis zueinander, so ergeben sich regelmäßig wiederkehrende Überlappungsbereiche OL1 und OL2. In diesem Fall erleichtert sich das Aushandeln und/oder Bestimmen der Zeitschlitze 50 und 52, so dass in diesen Fällen ein Überlappungsbereich OL1, OL2 regelmäßig wiederkehrt und daher nicht einzeln ausgehandelt oder bestimmt werden muss. Auch kann hierbei der Referenzzeitpunkt TRef beliebig innerhalb der regelmäßig wiederkehrenden Periode gewählt werden. Sind die Zykluszeitdauern TC1 und TC2 gleich, so gilt der Zeitversatz unabhängig von einem beliebig wählbaren Referenzzeitpunkt TRef.

In einem Ausführungsbeispiel ist das Gateway 30 weiterhin dazu eingerichtet, während der zeitlich überlappenden Zeitschlitze, z.B. OL1 bzw. OL2 zeitkritische Daten 70, 72 zu übertragen. In einer Ausführungsform erfolgt dies dadurch, dass das Gateway 30 die zwischen dem ersten und dem zweiten Feldbus 10, 20 ermittelten Zeitschlitze für zeitsensitiver Übertragung 50 und 52 und insbesondere die jeweiligen Überlappungsintervalle OL1, OL2 ermittelt und die Signale zwischen dem ersten und zweiten Feldbus während dieser Intervalle durchleitet.

Fig. 4 zeigt weiterhin ein Protokoll zur Übertragung von zeitsensitiven Daten zwischen dem ersten und dem zweiten Feldbus. Hierzu sei angenommen, dass beispielsweise die vorangehende beschriebene Prozedur zum Setzen zeitlich überlappenden Zeitschlitzen 50, 52 im ersten und zweiten Feldbus durchgeführt wurde. Um zeitsensitive Daten von dem Teilnehmergerät 14a im ersten Feldbus an das Teilnehmergerät 22 zu senden, sendet das Teilnehmergerät 14a während des Überlappungsintervalls OL1 diese Daten 70a zunächst an das Gateway 30, wobei die Daten 70a den Teilnehmergeräte-Indikator ID22' zur Identifikation des virtuellen Abbilds 22' enthalten. Das Gateway 30 empfängt die zeitsensitiven Daten 70a während des Überlappungsintervalls OL1. zur Weiterleitung bestimmt das Gateway den zugeordneten Identifikator ID22 des Teilnehmergeräts 22 im zweiten Feldbus während des Überlappungsintervalls OL1 und sendet die Daten 70b noch während des Überlappungsintervalls OL1 an das Teilnehmergerät 22 im zweiten Feldbus 20 weiter.

Durch das beschriebene Verfahren, System 1 und den Gateway 30 ist es möglich, zeitsensitive Feldbusse 10, 20 miteinander zu vernetzen, ohne dass eine Angleichung der Feldbuszeiten sowie der Kommunikationszyklen der Feldbusse vorgenommen werden muss. Dadurch können insbesondere bestehende und zum Teil miteinander inkompatible Feldbusse sowohl zum Austausch nicht-zeitsensitiver als auch zum Austausch zeitsensitiver Daten eingerichtet werden.

## Patentansprüche

1. Verfahren zur Vernetzung eines ersten zeitsensitiven Feldbusses (10) mit einem zweiten zeitsensitiven Feldbus (20), wobei der erste zeitsensitive Feldbus (10) ein erstes Teilnehmergerät (14a) umfasst und eine erste eigene Zeitdomäne (16) aufweist, und wobei der zweite zeitsensitive Feldbus (20) ein zweites Teilnehmergerät (22) umfasst und eine zweite eigene Zeitdomäne (26) aufweist, wobei die erste Zeitdomäne (16) und die zweite Zeitdomäne (26) frequenzsynchronisiert sind, wobei der erste und der zweite Feldbus (10, 20) mittels eines Gateways (30) miteinander verbunden sind, wobei das Verfahren die folgenden Schritte aufweist:
- Speichern im Speicher des Gateways (30) eines ersten Teilnehmergeräte-Identifikators (ID14'a), wobei der erste Teilnehmergeräte-Identifikator (ID14'a) ein virtuelles Abbild (14'a) des zugeordneten ersten Teilnehmergeräts (14a) des ersten Feldbusses (10) identifiziert;
- Speichern im Speicher des Gateways (30) eines zweiten Teilnehmergeräte-Identifikators (ID22'), wobei der zweite Teilnehmergeräte-Identifikator (ID22') ein virtuelles Abbild (22') des zugeordneten zweiten Teilnehmergeräts (22) des zweiten Feldbusses (20) identifiziert;
- Bestimmen einer ersten Zykluszeitdauer (TC1) des ersten Feldbusses (10) und einer zweiten Zykluszeitdauer (TC2) des zweiten Feldbusses (20) durch das Gateway (30) zu einem Referenzzeitpunkt (TRef); und
- Bestimmen eines Zeitversatzes (58) zwischen der ersten Zeitdomäne (16) und der zweiten Zeitdomäne (26) durch das Gateway (30) zu dem Referenzzeitpunkt (TRef).

2. Verfahren gemäß Anspruch 1, weiterhin aufweisend die folgenden Schritte:
- Empfangen, durch das Gateway (30), einer Anforderung (42) des zweiten Feldbusses (20) eines Zeitschlitzes (50) zur Übertragung von zeitsensitiven Daten von dem ersten Teilnehmergerät (14a) des ersten Feldbusses (10) zu dem zweiten Teilnehmergerät (22) des zweiten Feldbusses (20);
- Weiterleiten, durch das Gateway (30), der Anforderung (43) an den ersten Feldbus (10);
- Empfangen, durch das Gateway (30), einer Bestätigungsnachricht (45) von dem ersten Feldbus (10);
- Weiterleiten, durch das Gateway (30), der Bestätigungsnachricht (46) an den zweiten Feldbus (20).

3. Verfahren nach Anspruch 2,
- wobei die empfangene Anforderung (42) eine Zeitangabe (TA10) von mindestens einem Zeitpunkt und/oder mindestens einem Zeitintervall umfasst, wobei die Zeitangabe auf die Zeitdomäne (26) des zweiten Feldbusses (20) bezogen ist;
- wobei das Verfahren weiterhin ein Bestimmen, durch das Gateway (30), der Zeitangabe (TA10) aus der empfangenen Anforderung (42) bezogen auf die Zeitdomäne (16) des ersten Feldbusses (10) umfasst, unter Berücksichtigung des Zeitversatzes (58) mit Bezug auf den Referenzzeitpunkt (TRef);
- wobei die an den ersten Feldbus (10) weitergeleitete Anforderung (43) die Zeitangabe (TA10) bezogen auf die Zeitdomäne (16) des ersten Feldbusses (10) umfasst;
wobei das Verfahren weiterhin die folgenden Schritte aufweist:
- Setzen eines ersten Zeitschlitzes (50) zur Kommunikation zeitsensitiver Daten im ersten Feldbus (10), durch den ersten Feldbus (10), basierend auf der Zeitangabe (TA10) aus der Anforderung (43) bezogen auf die erste Zeitdomäne (16) des ersten Feldbusses (10); und
- Setzen eines zweiten Zeitschlitzes (52) zur Kommunikation zeitsensitiver Daten im zweiten Feldbus (20), durch den zweiten Feldbus (20), basierend auf der Zeitangabe (TA20) bezogen auf die zweite Zeitdomäne (26) des zweiten Feldbusses (20);
- wobei das Setzen des ersten Zeitschlitzes (50) durch den ersten Feldbus (10) sowie das Setzen des zweiten Zeitschlitzes (52) durch den zweiten Feldbus (52) jeweils derart erfolgt, dass sich der erste Zeitschlitz (50) des ersten Feldbusses (10) und der zweite Zeitschlitz (52) des zweiten Feldbusses (20) zeitlich überlappen (OL1, OL2).

4. Verfahren nach Anspruch 3, wobei:
- die empfangene Bestätigungsnachricht (45) von dem ersten Feldbus (10) eine weitere Zeitangabe (TB10) von mindestens einem Zeitpunkt und/oder mindestens einem Zeitintervall umfasst, wobei die weitere Zeitangabe (TB10) auf die Zeitdomäne (16) des ersten Feldbusses (10) bezogen ist;
- wobei das Verfahren weiterhin ein Bestimmen, durch das Gateway (30), der weiteren Zeitangabe (TB20) aus der empfangenen Bestätigungsnachricht (45) bezogen auf die Zeitdomäne (26) des zweiten Feldbusses (20) umfasst, unter Berücksichtigung des Zeitversatzes (58) mit Bezug auf den Referenzzeitpunkt (TRef);
- wobei die an den zweiten Feldbus (20) weitergeleitete Bestätigungsnachricht (46) die weitere Zeitangabe (TB20) bezogen auf die Zeitdomäne (16) des zweiten Feldbusses (20) umfasst;
- wobei das Setzen des ersten Zeitschlitzes (50) durch den ersten Feldbus (10) auf der genannten weiteren Zeitangabe (TB10) basiert; und
- wobei das Setzen des zweiten Zeitschlitzes (52) durch den zweiten Feldbus (20) auf der genannten weiteren Zeitangabe (TB20) basiert.

5. Verfahren nach einem der Ansprüche 3 oder 4, wobei das Verfahren weiterhin die folgenden Schritte aufweist:
- Empfangen, durch das Gateway (30), von zeitsensitiven Daten (70a) von dem ersten Teilnehmergerät (14a) des ersten Feldbusses (10), wobei die Zeitsensitiven Daten (70a) den zweiten Teilnehmergeräte-Indikator (ID22') enthalten während der Überlappung (OL1, OL2) des ersten Zeitschlitzes (50) und des zweiten Zeitschlitzes (52);
- Bestimmen, durch das Gateway (30) eines Identifikators (ID22) des zweiten Teilnehmergeräts (22) basierend auf dem zweiten Teilnehmergeräte-Identifikator (ID22') während der Überlappung (OL1, OL2) des ersten Zeitschlitzes (50) und des zweiten Zeitschlitzes (52);
- Weiterleiten (70b), durch das Gateway (30), der empfangenen zeitsensitiven Daten an das zweite Teilnehmergerät (22) während der Überlappung (OL1, OL2) des ersten Zeitschlitzes (50) und des zweiten Zeitschlitzes (52).

6. Verfahren gemäß einem der Ansprüche 1 bis 5, wobei zwischen dem ersten Feldbus (10) und dem zweiten Feldbus (20) gegeben ist:
- unterschiedliche Dauern (TS1, TS2) der ersten und zweiten Zeitschlitze (50, 52) für zeitsensitive Daten; und/oder
- zeitliche Unterschiede (TD) der ersten und zweiten Zeitschlitze (50, 52) für zeitsensitive Daten.

7. Verfahren gemäß einem der Ansprüche 1 bis 6, wobei das Gateway (30) einen ersten Zeitgeber (36) und einen zweiten Zeitgeber (38) aufweist, wobei das Verfahren weiterhin die folgenden Schritte aufweist:
- Synchronisieren des ersten Zeitgebers (36) als Slave mit der ersten Zeitdomäne (16) des ersten Feldbusses (10);
- Synchronisieren des zweiten Zeitgebers (38) als Slave mit der zweiten Zeitdomäne (26) des zweiten Feldbusses (20);
- Synchronisieren zunächst ausschließlich der Frequenz des ersten Zeitgebers (36) als Slave mit Frequenz (f2) der zweiten Zeitdomäne (26) des zweiten Zeitgebers (38); und danach
- Setzen des ersten Zeitgebers (36) als Master für den ersten Feldbus (10), um die Frequenz (f1) des ersten Feldbusses (10) auf die Frequenz des ersten Zeitgebers (38) zu setzen.

8. Gateway (30) zur Vernetzung eines ersten zeitsensitiven Feldbusses (10) mit einem zweiten zeitsensitiven Feldbus (20), wobei der erste zeitsensitive Feldbus (10) ein erstes Teilnehmergerät (14a) umfasst und eine erste eigene Zeitdomäne (16) aufweist, und wobei der zweite zeitsensitive Feldbus (20) ein zweites Teilnehmergerät (22) umfasst und eine zweite eigene Zeitdomäne (26) aufweist, wobei die erste Zeitdomäne (16) und die zweite Zeitdomäne (26) frequenzsynchronisiert sind, wobei das Gateway (30) umfasst:
- Mittel zum Verbinden jeweils des ersten zeitsensitiven Feldbusses (10) und des zweiten zeitsensitiven Feldbusses (20) mit dem Gateway (30);
- Mittel zum Speichern im Speicher des Gateways (30) eines ersten Teilnehmergeräte-Identifikators (ID14'a), wobei der erste Teilnehmergeräte-Identifikator (ID14'a) ein virtuelles Abbild (14'a) des zugeordneten ersten Teilnehmergeräts (14a) des ersten Feldbusses (10) identifiziert;
- Mittel zum Speichern im Speicher des Gateways (30) eines zweiten Teilnehmergeräte-Identifikators (ID22'), wobei der zweite Teilnehmergeräte-Identifikator (ID22') ein virtuelles Abbild (22') des zugeordneten zweiten Teilnehmergeräts (22) des zweiten Feldbusses (20) identifiziert;
- Mittel zum Bestimmen einer ersten Zykluszeitdauer (TC1) des ersten Feldbusses (10) und einer zweiten Zykluszeitdauer (TC2) des zweiten Feldbusses (20) zu einem Referenzzeitpunkt (TRef); und
- Mittel zum Bestimmen eines Zeitversatzes (58) zwischen der ersten Zeitdomäne (16) und der zweiten Zeitdomäne (26) zu dem Referenzzeitpunkt (TRef).

9. Gateway gemäß Anspruch 8, weiterhin aufweisend:
- Mittel zum Empfangen einer Anforderung (42) des zweiten Feldbusses eines Zeitschlitzes (50) zur Übertragung von zeitsensitiven Daten von dem ersten Teilnehmergerät (14a) des ersten Feldbusses (10) zu dem zweiten Teilnehmergerät (22) des zweiten Feldbusses (20);
- Mittel zum Weiterleiten der Anforderung an den ersten Feldbus (30);
- Mittel zum Empfangen einer Bestätigungsnachricht von dem ersten Feldbus (10);
- Mittel zum Weiterleiten der Bestätigungsnachricht an den zweiten Feldbus (20).

10. Gateway gemäß Anspruch 9,
- wobei die empfangene Anforderung (42) eine Zeitangabe (TA20) von mindestens einem Zeitpunkt und/oder mindestens einem Zeitintervall umfasst, wobei die Zeitangabe auf die Zeitdomäne (26) des zweiten Feldbusses (20) bezogen ist;
- wobei das Gateway (30) Mittel aufweist zum Bestimmen der Zeitangabe (TA10) aus der empfangenen Anforderung (42) bezogen auf die Zeitdomäne (16) des ersten Feldbusses (10), unter Berücksichtigung des Zeitversatzes (58) mit Bezug auf den Referenzzeitpunkt (TRef);
- wobei die an den ersten Feldbus (10) weitergeleitete Anforderung (43) die Zeitangabe (TA10) bezogen auf die Zeitdomäne (16) des ersten Feldbusses (10) umfasst.

11. Gateway nach einem der Ansprüche 8 bis 10, weiterhin umfassend:
- Mittel zum Bestimmen einer zeitlichen Überlappung (OL1, OL2) eines durch den ersten Feldbus gesetzten ersten Zeitschlitzes (50) zur Kommunikation zeitsensitiver Daten im ersten Feldbus (10) und eines durch den zweiten Feldbus (20) gesetzten zweiten Zeitschlitzes (52) zur Kommunikation zeitsensitiver Daten im zweiten Feldbus (20);
- Mittel zum Empfangen von zeitsensitiven Daten (70a) von dem ersten Teilnehmergerät (14a) des ersten Feldbusses (10), wobei die Zeitsensitiven Daten (70a) den zweiten Teilnehmergeräte-Indikator (ID22') enthalten während der Überlappung (OL1, OL2) des ersten Zeitschlitzes (50) und des zweiten Zeitschlitzes (52);
- Mittel zum Bestimmen eines Identifikators (ID22) des zweiten Teilnehmergeräts (22) basierend auf dem zweiten Teilnehmergeräte-Identifikator (ID22') während der Überlappung (OL1, OL2) des ersten Zeitschlitzes (50) und des zweiten Zeitschlitzes (52); und
- Mittel zum Weiterleiten (70b) der empfangenen zeitsensitiven Daten (70a) an das zweite Teilnehmergerät (22) während der Überlappung (OL1, OL2) des ersten Zeitschlitzes (50) und des zweiten Zeitschlitzes (52).

12. System zur Vernetzung mindestens zweier zeitsensitiver Feldbusse, aufweisend:
- einen ersten zeitsensitiven Feldbus (10), der ein erstes Teilnehmergerät (14a) umfasst und eine erste eigene Zeitdomäne (16) aufweist;
- einen zweiten zeitsensitiven Feldbus (20), der ein zweites Teilnehmergerät (22) umfasst und eine zweite eigene Zeitdomäne (26) aufweist, wobei die erste Zeitdomäne (16) und die zweite Zeitdomäne (26) frequenzsynchronisiert sind,
- ein Gateway (30) gemäß einem der Ansprüche 8 bis 11, das den ersten und den zweiten Feldbus (10, 20) miteinander verbindet.

13. System gemäß Anspruch 12, wobei
- das Gateway (30) Mittel aufweist zum Empfangen einer Anforderung (42) des zweiten Feldbusses eines Zeitschlitzes (50) zur Übertragung von zeitsensitiven Daten von dem ersten Teilnehmergerät (14a) des ersten Feldbusses (10) zu dem zweiten Teilnehmergerät (22) des zweiten Feldbusses (20);
- das Gateway (30) Mittel aufweist zum Weiterleiten der Anforderung (42) an den ersten Feldbus (30);
- das Gateway (30) Mittel aufweist zum Empfangen einer Bestätigungsnachricht (45) von dem ersten Feldbus (10);
- das Gateway (30) Mittel aufweist zum Weiterleiten der Bestätigungsnachricht (46) an den zweiten Feldbus (20).

14. System gemäß Anspruch 13.
- wobei die empfangene Anforderung (42) eine Zeitangabe (TA20) von mindestens einem Zeitpunkt und/oder mindestens einem Zeitintervall umfasst, wobei die Zeitangabe auf die Zeitdomäne (26) des zweiten Feldbusses (20) bezogen ist;
- wobei das Gateway (30) Mittel aufweist zum Bestimmen der Zeitangabe (TA10) aus der empfangenen Anforderung (42) bezogen auf die Zeitdomäne (16) des ersten Feldbusses (10), unter Berücksichtigung des Zeitversatzes (58) mit Bezug auf den Referenzzeitpunkt (TRef);
- wobei die an den ersten Feldbus (10) weitergeleitete Anforderung (43) die Zeitangabe (TA10) bezogen auf die Zeitdomäne (16) des ersten Feldbusses (10) umfasst;
- wobei der erste Feldbus (10) Mittel aufweist zum Setzen eines ersten Zeitschlitzes (50) zur Kommunikation zeitsensitiver Daten im ersten Feldbus (10), basierend auf der Zeitangabe (TA10) aus der Anforderung (43) bezogen auf die erste Zeitdomäne (16) des ersten Feldbusses (10);
- wobei der erste Feldbus (10) Mittel aufweist zum Setzen eines zweiten Zeitschlitzes (52) zur Kommunikation zeitsensitiver Daten im zweiten Feldbus (20), basierend auf der Zeitangabe (TA20) bezogen auf die zweite Zeitdomäne (26) des zweiten Feldbusses (20); und
- wobei das Setzen des ersten Zeitschlitzes (50) durch den ersten Feldbus (10) sowie das Setzen des zweiten Zeitschlitzes (52) durch den zweiten Feldbus (52) jeweils derart erfolgt, dass sich der erste Zeitschlitz (50) des ersten Feldbusses (10) und der zweite Zeitschlitz (52) des zweiten Feldbusses (20) zeitlich überlappen (OL1, OL2).

15. System gemäß Anspruch 14,
- wobei die durch das Gateway (30) empfangene Bestätigungsnachricht (45) von dem ersten Feldbus (10) eine weitere Zeitangabe (TB10) von mindestens einem Zeitpunkt und/oder mindestens einem Zeitintervall umfasst, wobei die weitere Zeitangabe (TB10) auf die Zeitdomäne (16) des ersten Feldbusses (10) bezogen ist;
- wobei das Gateway (30) Mittel aufweist zum Bestimmen der weiteren Zeitangabe (TB20) aus der empfangenen Bestätigungsnachricht (45) bezogen auf die Zeitdomäne (26) des zweiten Feldbusses (20), unter Berücksichtigung des Zeitversatzes (58) mit Bezug auf den Referenzzeitpunkt (TRef);
- wobei die an den zweiten Feldbus (20) weitergeleitete Bestätigungsnachricht (46) die weitere Zeitangabe (TB20) bezogen auf die Zeitdomäne (16) des zweiten Feldbusses (20) umfasst;
- wobei das Setzen des ersten Zeitschlitzes (50) durch den ersten Feldbus (10) auf der genannten weiteren Zeitangabe (TB10) basiert; und
- wobei das Setzen des zweiten Zeitschlitzes (52) durch den zweiten Feldbus (20) auf der genannten weiteren Zeitangabe (TB20) basiert.

## Claims

1. Method for networking a first time-sensitive field bus (10) with a second time-sensitive field bus (20), wherein the first time-sensitive field bus (10) comprises a first subscriber device (14a) and has a first dedicated time domain (16), and wherein the second time-sensitive field bus (20) comprises a second subscriber device (22) and has a second dedicated time domain (26), wherein the first time domain (16) and the second time domain (26) are frequency-synchronized, wherein the first and the second field bus (10, 20) are connected to one another by means of a gateway (30), wherein the method has the following steps:
- storing in the memory of the gateway (30) a first subscriber device identifier (ID14'a), wherein the first subscriber device identifier (ID14'a) identifies a virtual image (14'a) of the associated first subscriber device (14a) of the first field bus (10);
- storing in the memory of the gateway (30) a second subscriber device identifier (ID22'), wherein the second subscriber device identifier (ID22') identifies a virtual image (22') of the associated second subscriber device (22) of the second field bus (20);
- determining a first cycle time duration (TC1) of the first field bus (10) and a second cycle time duration (TC2) of the second field bus (20) by the gateway (30) at a reference time (TRef); and
- determining a time offset (58) between the first time domain (16) and the second time domain (26) by the gateway (30) at the reference time (TRef).

2. Method according to Claim 1, furthermore having the following steps:
- receiving, by the gateway (30), a request (42) from the second field bus (20) for a time slot (50) for transmitting time-sensitive data from the first subscriber device (14a) of the first field bus (10) to the second subscriber device (22) of the second field bus (20);
- forwarding, by the gateway (30), the request (43) to the first field bus (10);
- receiving, by the gateway (30), an acknowledgement message (45) from the first field bus (10);
- forwarding, by the gateway (30), the acknowledgement message (46) to the second field bus (20).

3. Method according to Claim 2,
- wherein the received request (42) comprises a time indication (TA10) of at least one point in time and/or at least one time interval, the time indication being related to the time domain (26) of the second field bus (20);
- wherein the method further comprises determining, by the gateway (30), the time indication (TA10) from the received request (42) related to the time domain (16) of the first field bus (10), taking into account the time offset (58) with respect to the reference time (TRef);
- wherein the request (43) forwarded to the first field bus (10) comprises the time indication (TA10) related to the time domain (16) of the first field bus (10);
wherein the method furthermore has the following steps:
- setting a first time slot (50) for communicating time-sensitive data in the first field bus (10), by the first field bus (10), based on the time indication (TA10) from the request (43) related to the first time domain (16) of the first field bus (10); and
- setting a second time slot (52) for communicating time-sensitive data in the second field bus (20), by the second field bus (20), based on the time indication (TA20) related to the second time domain (26) of the second field bus (20);
- wherein the first time slot (50) is set by the first field bus (10) and the second time slot (52) is set by the second field bus (52) in each case in such a way that the first time slot (50) of the first field bus (10) and the second time slot (52) of the second field bus (20) overlap in time (OL1, OL2).

4. Method according to Claim 3, wherein:
- the received acknowledgement message (45) from the first field bus (10) comprises a further time indication (TB10) of at least one point in time and/or at least one time interval, the further time indication (TB10) being related to the time domain (16) of the first field bus (10);
- wherein the method furthermore comprises determining, by the gateway (30), the further time indication (TB20) from the received acknowledgement message (45) related to the time domain (26) of the second field bus (20), taking into account the time offset (58) with respect to the reference time (TRef);
- wherein the acknowledgement message (46) forwarded to the second field bus (20) comprises the further time indication (TB20) related to the time domain (16) of the second field bus (20);
- wherein the first time slot (50) is set by the first field bus (10) on the basis of said further time indication (TB10); and
- wherein the second time slot (52) is set by the second field bus (20) on the basis of said further time indication (TB20).

5. Method according to either of Claims 3 or 4, wherein the method furthermore has the following steps:
- receiving, by the gateway (30), time-sensitive data (70a) from the first subscriber device (14a) of the first field bus (10), wherein the time-sensitive data (70a) contain the second subscriber device indicator (ID22') during the overlap (OL1, OL2) of the first time slot (50) and the second time slot (52);
- determining, by the gateway (30), an identifier (ID22) of the second subscriber device (22) based on the second subscriber device identifier (ID22') during the overlap (OL1, OL2) of the first time slot (50) and the second time slot (52);
- forwarding (70b), by the gateway (30), the received time-sensitive data to the second subscriber device (22) during the overlap (OL1, OL2) of the first time slot (50) and the second time slot (52).

6. Method according to one of Claims 1 to 5, wherein there are, between the first field bus (10) and the second field bus (20):
- different durations (TS1, TS2) of the first and second time slots (50, 52) for time-sensitive data; and/or
- time differences (TD) of the first and second time slots (50, 52) for time-sensitive data.

7. Method according to one of Claims 1 to 6, wherein the gateway (30) has a first timer (36) and a second timer (38), wherein the method furthermore has the following steps:
- synchronizing the first timer (36) as a slave with the first time domain (16) of the first field bus (10);
- synchronizing the second timer (38) as a slave with the second time domain (26) of the second field bus (20);
- initially synchronizing exclusively the frequency of the first timer (36) as a slave with frequency (f2) of the second time domain (26) of the second timer (38); and then
- setting the first timer (36) as a master for the first field bus (10) in order to set the frequency (f1) of the first field bus (10) to the frequency of the first timer (38).

8. Gateway (30) for networking a first time-sensitive field bus (10) with a second time-sensitive field bus (20), wherein the first time-sensitive field bus (10) comprises a first subscriber device (14a) and has a first dedicated time domain (16), and wherein the second time-sensitive field bus (20) comprises a second subscriber device (22) and has a second dedicated time domain (26), wherein the first time domain (16) and the second time domain (26) are frequency-synchronized, wherein the gateway (30) comprises:
- means for connecting in each case the first time-sensitive field bus (10) and the second time-sensitive field bus (20) to the gateway (30);
- means for storing in the memory of the gateway (30) a first subscriber device identifier (ID14'a), wherein the first subscriber device identifier (ID14'a) identifies a virtual image (14'a) of the associated first subscriber device (14a) of the first field bus (10);
- means for storing in the memory of the gateway (30) a second subscriber device identifier (ID22'), wherein the second subscriber device identifier (ID22') identifies a virtual image (22') of the associated second subscriber device (22) of the second field bus (20);
- means for determining a first cycle time duration (TC1) of the first field bus (10) and a second cycle time duration (TC2) of the second field bus (20) at a reference time (TRef); and
- means for determining a time offset (58) between the first time domain (16) and the second time domain (26) at the reference time (TRef).

9. Gateway according to Claim 8, furthermore having:
- means for receiving a request (42) from the second field bus for a time slot (50) for transmitting time-sensitive data from the first subscriber device (14a) of the first field bus (10) to the second subscriber device (22) of the second field bus (20);
- means for forwarding the request to the first field bus (30);
- means for receiving an acknowledgement message from the first field bus (10);
- means for forwarding the acknowledgement message to the second field bus (20).

10. Gateway according to Claim 9,
- wherein the received request (42) comprises a time indication (TA20) of at least one point in time and/or at least one time interval, the time indication being related to the time domain (26) of the second field bus (20);
- wherein the gateway (30) has means for determining the time indication (TA10) from the received request (42) related to the time domain (16) of the first field bus (10), taking into account the time offset (58) with respect to the reference time (TRef);
- wherein the request (43) forwarded to the first field bus (10) comprises the time indication (TA10) related to the time domain (16) of the first field bus (10).

11. Gateway according to one of Claims 8 to 10, furthermore comprising:
- means for determining a time overlap (OL1, OL2) of a first time slot (50) set by the first field bus for communicating time-sensitive data in the first field bus (10) and a second time slot (52) set by the second field bus (20) for communicating time-sensitive data in the second field bus (20);
- means for receiving time-sensitive data (70a) from the first subscriber device (14a) of the first field bus (10), wherein the time-sensitive data (70a) contain the second subscriber device indicator (ID22') during the overlap (OL1, OL2) of the first time slot (50) and the second time slot (52);
- means for determining an identifier (ID22) of the second subscriber device (22) based on the second subscriber device identifier (ID22') during the overlap (OL1, OL2) of the first time slot (50) and the second time slot (52); and
- means for forwarding (70b) the received time-sensitive data (70a) to the second subscriber device (22) during the overlap (OL1, OL2) of the first time slot (50) and the second time slot (52).

12. System for networking at least two time-sensitive field buses, having:
- a first time-sensitive field bus (10), which comprises a first subscriber device (14a) and has a first dedicated time domain (16);
- a second time-sensitive field bus (20), which comprises a second subscriber device (22) and has a second dedicated time domain (26), wherein the first time domain (16) and the second time domain (26) are frequency-synchronized,
- a gateway (30) according to one of Claims 8 to 11, which connects the first and the second field bus (10, 20) to one another.

13. System according to Claim 12, wherein
- the gateway (30) has means for receiving a request (42) from the second field bus for a time slot (50) for transmitting time-sensitive data from the first subscriber device (14a) of the first field bus (10) to the second subscriber device (22) of the second field bus (20);
- the gateway (30) has means for forwarding the request (42) to the first field bus (30);
- the gateway (30) has means for receiving an acknowledgement message (45) from the first field bus (10);
- the gateway (30) has means for forwarding the acknowledgement message (46) to the second field bus (20).

14. System according to Claim 13,
- wherein the received request (42) comprises a time indication (TA20) of at least one point in time and/or at least one time interval, the time indication being related to the time domain (26) of the second field bus (20);
- wherein the gateway (30) has means for determining the time indication (TA10) from the received request (42) related to the time domain (16) of the first field bus (10), taking into account the time offset (58) with respect to the reference time (TRef);
- wherein the request (43) forwarded to the first field bus (10) comprises the time indication (TA10) related to the time domain (16) of the first field bus (10);
- wherein the first field bus (10) has means for setting a first time slot (50) for communicating time-sensitive data in the first field bus (10), based on the time indication (TA10) from the request (43) related to the first time domain (16) of the first field bus (10);
- wherein the first field bus (10) has means for setting a second time slot (52) for communicating time-sensitive data in the second field bus (20), based on the time indication (TA20) related to the second time domain (26) of the second field bus (20); and
- wherein the first time slot (50) is set by the first field bus (10) and the second time slot (52) is set by the second field bus (52) in each case in such a way that the first time slot (50) of the first field bus (10) and the second time slot (52) of the second field bus (20) overlap in time (OL1, OL2).

15. System according to Claim 14,
- wherein the acknowledgement message (45) received by the gateway (30) from the first field bus (10) comprises a further time indication (TB10) of at least one point in time and/or at least one time interval, the further time indication (TB10) being related to the time domain (16) of the first field bus (10);
- wherein the gateway (30) has means for determining the further time indication (TB20) from the received acknowledgement message (45) related to the time domain (26) of the second field bus (20), taking into account the time offset (58) with respect to the reference time (TRef);
- wherein the acknowledgement message (46) forwarded to the second field bus (20) comprises the further time indication (TB20) related to the time domain (16) of the second field bus (20);
- wherein the first time slot (50) is set by the first field bus (10) on the basis of said further time indication (TB10); and
- wherein the second time slot (52) is set by the second field bus (20) on the basis of said further time indication (TB20).

## Revendications

1. Procédé de mise en réseau d'un premier bus de terrain (10) sensible au temps avec un deuxième bus de terrain (20) sensible au temps, dans lequel le premier bus de terrain (10) sensible au temps inclut un premier dispositif de participant (14a) et comporte un premier domaine temporel dédié (16), et dans lequel le deuxième bus de terrain (20) sensible au temps inclut un deuxième dispositif de participant (22) et comporte un deuxième domaine temporel dédié (26), dans lequel le premier domaine temporel (16) et le deuxième domaine temporel (26) sont synchronisés en fréquence, dans lequel le premier et le deuxième bus de terrain (10, 20) sont reliés entre eux au moyen d'une passerelle (30), dans lequel le procédé comporte les étapes suivantes :
- mémorisation dans la mémoire de la passerelle (30) d'un premier identifiant de dispositif de participant (ID14'a), dans lequel le premier identifiant de dispositif de participant (ID14'a) identifie une image virtuelle (14'a) du premier dispositif de participant (14a) associé du premier bus de terrain (10) ;
- mémorisation dans la mémoire de la passerelle (30) d'un deuxième identifiant de dispositif de participant (ID22'), dans lequel le deuxième identifiant de dispositif de participant (ID22') identifie une image virtuelle (22') du deuxième dispositif de participant (22) associé du deuxième bus de terrain (20) ;
- détermination d'une première durée de cycle (TC1) du premier bus de terrain (10) et d'une deuxième durée de cycle (TC2) du deuxième bus de terrain (20) par la passerelle (30) à un moment de référence (TRef) ; et
- détermination d'un décalage temporel (58) entre le premier domaine temporel (16) et le deuxième domaine temporel (26) par la passerelle (30) au moment de référence (TRef).

2. Procédé selon la revendication 1, comportant en outre les étapes suivantes :
- réception, par la passerelle (30), d'une demande (42) du deuxième bus de terrain (20) d'un créneau horaire (50) pour la transmission de données sensibles au temps du premier dispositif de participant (14a) du premier bus de terrain (10) au deuxième dispositif de participant (22) du deuxième bus de terrain (20) ;
- transfert, par la passerelle (30), de la demande (43) au premier bus de terrain (10) ;
- réception, par la passerelle (30), d'un message de confirmation (45) du premier bus de terrain (10) ;
- transfert, par la passerelle (30), du message de confirmation (46) au deuxième bus de terrain (20).

3. Procédé selon la revendication 2,
- dans lequel la demande (42) reçue inclut une indication de temps (TA10) d'au moins un moment et/ou d'au moins un intervalle de temps, dans lequel l'indication de temps se rapporte au domaine temporel (26) du deuxième bus de terrain (20) ;
- dans lequel le procédé comprend par ailleurs une détermination, par la passerelle (30), de l'indication de temps (TA10) à partir de la demande (42) reçue par rapport au domaine temporel (16) du premier bus de terrain (10), en tenant compte du décalage temporel (58) par rapport au moment de référence (TRef) ;
- dans lequel la demande (43) transférée au premier bus de terrain (10) inclut l'indication de temps (TA10) par rapport au domaine temporel (16) du premier bus de terrain (10) ;
dans lequel le procédé comporte par ailleurs les étapes suivantes :
- définition d'un premier créneau horaire (50) pour la communication de données sensibles au temps dans le premier bus de terrain (10), par le premier bus de terrain (10), sur la base de l'indication de temps (TA10) de la demande (43) par rapport au premier domaine temporel (16) du premier bus de terrain (10) ; et
- définition d'un deuxième créneau horaire (52) pour la communication de données sensibles au temps dans le deuxième bus de terrain (20), par le deuxième bus de terrain (20), sur la base de l'indication de temps (TA20) par rapport au deuxième domaine temporel (26) du deuxième bus de terrain (20) ;
- dans lequel la définition du premier créneau horaire (50) par le premier bus de terrain (10) ainsi que la définition du deuxième créneau horaire (52) par le deuxième bus de terrain (52) s'effectuent respectivement de telle manière que le premier créneau horaire (50) du premier bus de terrain (10) et le deuxième créneau horaire (52) du deuxième bus de terrain (20) se chevauchent dans le temps (OL1, OL2).

4. Procédé selon la revendication 3 dans lequel :
- le message de confirmation (45) reçu du premier bus de terrain (10) inclut une indication de temps supplémentaire (TB10) d'au moins un moment et/ou d'au moins un intervalle de temps, dans lequel l'indication de temps supplémentaire (TB10) se rapporte au domaine temporel (16) du premier bus de terrain (10) ;
- dans lequel le procédé comprend par ailleurs une détermination, par la passerelle (30), de l'indication de temps supplémentaire (TB20) à partir du message de confirmation (45) reçu par rapport au domaine temporel (26) du deuxième bus de terrain (20), en tenant compte du décalage temporel (58) par rapport au moment de référence (TRef) ;
- dans lequel le message de confirmation (46) transféré au deuxième bus de terrain (20) inclut l'indication de temps supplémentaire (TB20) par rapport au domaine temporel (16) du deuxième bus de terrain (20) ;
- dans lequel la définition du premier créneau horaire (50) par le premier bus de terrain (10) est basée sur ladite indication de temps supplémentaire (TB10) mentionnée ; et
- dans lequel la définition du deuxième créneau horaire (52) par le deuxième bus de terrain (20) est basée sur l'indication de temps supplémentaire (TB20) mentionnée.

5. Procédé selon l'une des revendications 3 ou 4, dans lequel le procédé comporte par ailleurs les étapes suivantes :
- réception, par la passerelle (30), de données sensibles au temps (70a) du premier dispositif de participant (14a) du premier bus de terrain (10), dans lequel les données sensibles au temps (70a) contiennent le deuxième indicateur de dispositif de participant (ID22') pendant le chevauchement (OL1, OL2) du premier créneau horaire (50) et du deuxième créneau horaire (52) ;
- détermination, par la passerelle (30), d'un identifiant (ID22) du deuxième dispositif de participant (22) sur la base du deuxième identifiant de dispositif de participant (ID22') pendant le chevauchement (OL1, OL2) du premier créneau horaire (50) et du deuxième créneau horaire (52) ;
- transfert (70b), par la passerelle (30), des données sensibles au temps reçues au deuxième dispositif de participant (22) pendant le chevauchement (OL1, OL2) du premier créneau horaire (50) et du deuxième créneau horaire (52).

6. Procédé selon l'une des revendications 1 à 5, dans lequel il y a entre le premier bus de terrain (10) et le deuxième bus de terrain (20) :
- des durées différentes (TS1, TS2) des premier et deuxième créneaux horaires (50, 52) pour des données sensibles au temps ; et/ou
- des différences temporelles (TD) des premier et deuxième créneaux horaires (50, 52) pour les données sensibles au temps.

7. Procédé selon l'une des revendications 1 à 6, dans lequel la passerelle (30) comporte un premier temporisateur (36) et un deuxième temporisateur (38), dans lequel le procédé comporte par ailleurs les étapes suivantes :
- synchronisation du premier temporisateur (36) en tant qu'esclave avec le premier domaine temporel (16) du premier bus de terrain (10) ;
- synchronisation du deuxième temporisateur (38) en tant qu'esclave avec le deuxième domaine temporel (26) du deuxième bus de terrain (20) ;
- synchronisation d'abord exclusivement de la fréquence du premier temporisateur (36) en tant qu'esclave avec la fréquence (f2) du deuxième domaine temporel (26) du deuxième temporisateur (38) ; puis
- définition du premier temporisateur (36) en tant que maître pour le premier bus de terrain (10) pour régler la fréquence (f1) du premier bus de terrain (10) sur la fréquence du premier temporisateur (38).

8. Passerelle (30) de mise en réseau d'un premier bus de terrain (10) sensible au temps avec un deuxième bus de terrain (20) sensible au temps, dans laquelle le premier bus de terrain (10) sensible au temps inclut un premier dispositif de participant (14a) et comporte un premier domaine temporel (16) dédié, et le deuxième bus de terrain (20) sensible au temps inclut un deuxième dispositif de participant (22) et comporte un deuxième domaine temporel (26) dédié, dans laquelle le premier domaine temporel (16) et le deuxième domaine temporel (26) sont synchronisés en fréquence, dans laquelle la passerelle (30) comprend :
- des moyens de liaison respectivement du premier bus de terrain (10) sensible au temps et du deuxième bus de terrain (20) sensible au temps à la passerelle (30) ;
- des moyens de mémorisation dans la mémoire de la passerelle (30) d'un premier identifiant de dispositif de participant (ID14'a), dans laquelle le premier identifiant de dispositif de participant (ID14'a) identifie une image virtuelle (14'a) du premier dispositif de participant (14a) associé du premier bus de terrain (10) ;
- des moyens de mémorisation dans la mémoire de la passerelle (30) d'un deuxième identifiant de dispositif de participant (ID22'), dans laquelle le deuxième identifiant de dispositif de participant (ID22') identifie une image virtuelle (22') du deuxième dispositif de participant (22) associé du deuxième bus de terrain (20) ;
- des moyens de détermination d'une première durée de cycle (TC1) du premier bus de terrain (10) et d'une deuxième durée de cycle (TC2) du deuxième bus de terrain (20) à un moment de référence (TRef) ; et
- des moyens de détermination d'un décalage temporel (58) entre le premier domaine temporel (16) et le deuxième domaine temporel (26) au moment de référence (TRef).

9. Passerelle selon la revendication 8, comportant en outre :
- des moyens de réception d'une demande (42) du deuxième bus de terrain d'un créneau horaire (50) pour la transmission de données sensibles au temps du premier dispositif de participant (14a) du premier bus de terrain (10) au deuxième dispositif de participant (22) du deuxième bus de terrain (20) ;
- des moyens de transfert de la demande au premier bus de terrain (30) ;
- des moyens de réception d'un message de confirmation du premier bus de terrain (10) ;
- des moyens de transfert du message de confirmation au deuxième bus de terrain (20).

10. Passerelle selon la revendication 9,
- dans laquelle la demande (42) reçue inclut une indication de temps (TA20) d'au moins un moment et/ou d'au moins un intervalle de temps, dans laquelle l'indication de temps se rapporte au domaine temporel (26) du deuxième bus de terrain (20) ;
- dans laquelle la passerelle (30) comporte des moyens de détermination de l'indication de temps (TA10) à partir de la demande (42) reçue par rapport au domaine temporel (16) du premier bus de terrain (10), en tenant compte du décalage temporel (58) par rapport au moment de référence (TRef) ;
- dans laquelle la demande (43) transférée au premier bus de terrain (10) inclut l'indication de temps (TA10) par rapport au domaine temporel (16) du premier bus de terrain (10).

11. Passerelle selon l'une des revendications 8 à 10, comprenant en outre :
- des moyens de détermination d'un chevauchement temporel (OL1, OL2) d'un premier créneau horaire (50) défini par le premier bus de terrain pour la communication de données sensibles au temps dans le premier bus de terrain (10) et d'un deuxième créneau horaire (52) défini par le deuxième bus de terrain (20) pour la communication de données sensibles au temps dans le deuxième bus de terrain (20) ;
- des moyens de réception de données sensibles au temps (70a) du premier dispositif de participant (14a) du premier bus de terrain (10), dans laquelle les données sensibles au temps (70a) contiennent le deuxième indicateur de dispositif de participant (ID22') pendant le chevauchement (OL1, OL2) du premier créneau horaire (50) et du deuxième créneau horaire (52) ;
- des moyens de détermination d'un identifiant (ID22) du deuxième dispositif de participant (22) sur la base du deuxième identifiant de dispositif de participant (ID22') pendant le chevauchement (OL1, OL2) du premier créneau horaire (50) et du deuxième créneau horaire (52) ; et
- des moyens de transfert (70b) des données sensibles au temps (70a) reçues au deuxième dispositif de participant (22) pendant le chevauchement (OL1, OL2) du premier créneau horaire (50) et du deuxième créneau horaire (52).

12. Système de mise en réseau d'au moins deux bus de terrain sensibles au temps, comportant :
- un premier bus de terrain (10) sensible au temps, qui inclut un premier dispositif de participant (14a) et comporte un premier domaine temporel (16) dédié ;
- un deuxième bus de terrain (20) sensible au temps, qui inclut un deuxième dispositif de participant (22) et comporte un deuxième domaine temporel (26) dédié, dans lequel le premier domaine temporel (16) et le deuxième domaine temporel (26) sont synchronisés en fréquence,
- une passerelle (30) selon l'une des revendications 8 à 11, qui relie le premier et le deuxième bus de terrain (10, 20) l'un à l'autre.

13. Système selon la revendication 12, dans lequel
- la passerelle (30) comporte des moyens de réception d'une demande (42) du deuxième bus de terrain d'un créneau horaire (50) pour la transmission de données sensibles au temps du premier dispositif de participant (14a) du premier bus de terrain (10) au deuxième dispositif de participant (22) du deuxième bus de terrain (20) ;
- la passerelle (30) comporte des moyens de transfert de la demande (42) au premier bus de terrain (30) ;
- la passerelle (30) comporte des moyens de réception d'un message de confirmation (45) du premier bus de terrain (10) ;
- la passerelle (30) comporte des moyens de transfert du message de confirmation (46) au deuxième bus de terrain (20).

14. Système selon la revendication 13.
- dans lequel la demande (42) reçue inclut une indication de temps (TA20) d'au moins un moment et/ou d'au moins un intervalle de temps, dans lequel l'indication de temps se rapporte au domaine temporel (26) du deuxième bus de terrain (20) ;
- dans lequel la passerelle (30) comporte des moyens de détermination de l'indication de temps (TA10) à partir de la demande (42) reçue par rapport au domaine temporel (16) du premier bus de terrain (10), en tenant compte du décalage temporel (58) par rapport au moment de référence (TRef) ;
- dans lequel la demande (43) transférée au premier bus de terrain (10) inclut l'indication de temps (TA10) par rapport au domaine temporel (16) du premier bus de terrain (10) ;
- dans lequel le premier bus de terrain (10) comporte des moyens de définition d'un premier créneau horaire (50) pour la communication de données sensibles au temps dans le premier bus de terrain (10), sur la base de l'indication de temps (TA10) de la demande (43) par rapport au premier domaine temporel (16) du premier bus de terrain (10) ;
- dans lequel le premier bus de terrain (10) comporte des moyens de définition d'un deuxième créneau horaire (52) pour la communication de données sensibles au temps dans le deuxième bus de terrain (20), sur la base de l'indication de temps (TA20) par rapport au deuxième domaine temporel (26) du deuxième bus de terrain (20) ; et
- dans lequel la définition du premier créneau horaire (50) par le premier bus de terrain (10) ainsi que la définition du deuxième créneau horaire (52) par le deuxième bus de terrain (52) s'effectuent respectivement de telle manière que le premier créneau horaire (50) du premier bus de terrain (10) et le deuxième créneau horaire (52) du deuxième bus de terrain (20) se chevauchent dans le temps (OL1, OL2).

15. Système selon la revendication 14,
- dans lequel le message de confirmation (45) reçu par la passerelle (30) du premier bus de terrain (10) inclut une indication de temps supplémentaire (TB10) d'au moins un moment et/ou d'au moins un intervalle de temps, dans lequel l'indication de temps supplémentaire (TB10) se rapporte au domaine temporel (16) du premier bus de terrain (10) ;
- dans lequel la passerelle (30) comporte des moyens de détermination de l'indication de temps supplémentaire (TB20) à partir du message de confirmation (45) reçu par rapport au domaine temporel (26) du deuxième bus de terrain (20), en tenant compte du décalage temporel (58) par rapport au moment de référence (TRef) ;
- dans lequel le message de confirmation (46) transféré au deuxième bus de terrain (20) inclut l'indication de temps supplémentaire (TB20) par rapport au domaine temporel (16) du deuxième bus de terrain (20) ;
- dans lequel la définition du premier créneau horaire (50) par le premier bus de terrain (10) est basée sur ladite indication de temps supplémentaire (TB10) mentionnée ; et
- dans lequel la définition du deuxième créneau horaire (52) par le deuxième bus de terrain (20) est basé sur l'indication de temps supplémentaire (TB20) mentionnée.
